(19) Europäisches Patentamt / European Patent Office / Office européen des brevets

(11) EP 4 488 308 A1

(12) **EUROPEAN PATENT APPLICATION**
published in accordance with Art. 153(4) EPC

(43) Date of publication:
**08.01.2025 Bulletin 2025/02**

(21) Application number: **23763280.7**

(22) Date of filing: **17.02.2023**

(51) International Patent Classification (IPC):
***C08G 18/38*** *(2006.01)* ***C08G 18/61*** *(2006.01)*

(52) Cooperative Patent Classification (CPC):
**C08G 18/38; C08G 18/61**

(86) International application number:
**PCT/JP2023/005772**

(87) International publication number:
**WO 2023/167021 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 JP 2022031396**

(71) Applicant: **SHIN-ETSU CHEMICAL CO., LTD.**
**Tokyo 1000005 (JP)**

(72) Inventors:
- **SAKUTA Koji**
  **Annaka-shi, Gunma 379-0224 (JP)**
- **ANDO Yuji**
  **Annaka-shi, Gunma 379-0224 (JP)**
- **MEGURIYA Noriyuki**
  **Annaka-shi, Gunma 379-0224 (JP)**

(74) Representative: **Mewburn Ellis LLP**
**Aurora Building**
**Counterslip**
**Bristol BS1 6BX (GB)**

(54) **SILOXANE-MODIFIED POLYURETHANE COMPOSITION**

(57) Provided is a siloxane-modified polyurethane composition that contains:
(A) a hydroxyl group-containing organosilicon compound represented by formula (1).

$$(R^1{}_3SiO_{1/2})_k(R^1{}_2SiO_{2/2})_p(R^1SiO_{3/2})_q(SiO_{4/2})_r \qquad (1)$$

[wherein: $R^1$ is a monovalent hydrocarbon group, etc., provided that at least one of all $R^1$ groups is a group represented by formula (2); and $k > 0$, $p \geq 0$, $q \geq 0$ and $r \geq 0$, provided that $k+p+q \geq 2$.]

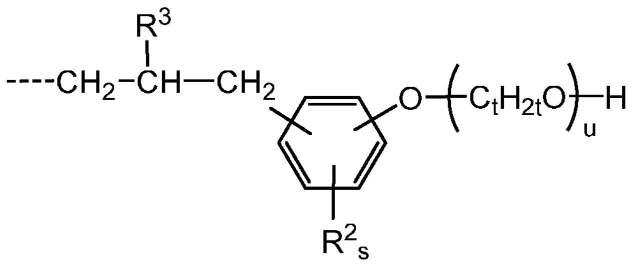

(2)

($R^2$ is a hydrogen atom, etc., and $R^3$ is a hydrogen atom or a methyl group; s is an integer of 0-4, t is an integer of 2-4 and u is a numerical value of 1-3; and the broken line represents a bond);
(B) an isocyanate compound having two or more isocyanate groups per molecule; and
(C) an organic compound having two or more functional groups capable of reacting with isocyanate groups per molecule.

EP 4 488 308 A1

## Description

### TECHNICAL FIELD

The present invention relates to a siloxane-modified polyurethane composition. More particularly, it relates to a siloxane-modified polyurethane composition having a novel structure and to a cured form thereof.

### BACKGROUND ART

Polyurethane resins have tensile strength, flex resistance, wear resistance and oil resistance. Moreover, depending on their composition, they can be made thermoplastic or heat-curable and so can be processed into various shapes.

Polyols, isocyanates, chain extenders and the like are used as polyurethane resin starting materials. The copolymerization of, as polyols, hydroxyl group-containing siloxanes for the purpose of imparting flexibility and slip characteristics to this polyurethane resin has been disclosed (Patent Documents 1 to 8).

The hydroxyl group-containing polysiloxanes mentioned in these patent documents are industrially produced by hydrosilylation reactions between a hydrogenpolysiloxane and a hydroxyl group-containing olefin compound such as allyl glycol or a polyoxyalkylene monoallyl ether.

However, allyl glycol, for example, has a poor compatibility with hydrogenpolysiloxanes and so when these compounds are reacted in the absence of a solvent, a large excess of allyl glycol relative to the hydrosilyl groups is sometimes needed.

This is resolved by using an alcohol solvent such as ethanol or 2-propanol at the time of the hydrosilylation reaction, which raises the reactivity. Yet, by-products of the dehydrogenation reaction between the hydroxyl group on the solvent and hydrosilyl groups on the hydrogenpolysiloxane readily arise. Such by-products lower the strength of the siloxane-modified polyurethane resin.

Although not industrially produced, hydroxyl group-containing polysiloxanes which correspond to structures obtained by the addition reaction of a hydrogenpolysiloxane with allyl alcohol are also reported in the above patent documents.

In addition, Patent Document 9 discloses a polysiloxane having phenolic hydroxyl groups and hydroxyalkylene phenyl groups, but because phenolic hydroxyl groups have a low reactivity with isocyanate groups, this polysiloxane is unsuitable for urethane resin synthesis. Moreover, polysiloxanes having hydroxyalkylene phenyl groups are difficult to industrially produce.

At the same time, a drawback of polyurethane resins is their low heat resistance. As mentioned above, siloxane-modified polyurethane resins have a reduced strength.

Hence, there exists a desire for siloxane-modified polyurethane resins of excellent heat resistance and strength.

### PRIOR ART DOCUMENTS

### PATENT DOCUMENTS

Patent Document 1: JP-A H10-101766
Patent Document 2: JP-A 2017-52821
Patent Document 3: JP-A 2004-250683
Patent Document 4: JP-A 2004-332126
Patent Document 5: JP-A 2011-174037
Patent Document 6: JP-A 2014-77120
Patent Document 7: JP-A 2014-193945
Patent Document 8: WO 2016/158967
Patent Document 9: JP-A 2007-508425

### SUMMARY OF INVENTION

### TECHNICAL PROBLEM

In light of the above, the object of the present invention is to provide a siloxane-modified polyurethane composition which is easy to prepare and which gives a cured product having high resin property values such as tensile

strength and an excellent heat resistance.

SOLUTION TO PROBLEM

The inventors have conducted intensive investigations in order to achieve the above object. As a result, they have discovered that this object can be achieved by including a siloxane compound of a specific structure within the polyurethane composition. This discovery ultimately led to the present invention.

Accordingly, the invention provides:

1. A siloxane-modified polyurethane composition which includes:

(A) a hydroxyl group-containing organosilicon compound of general formula (1) below

$$(R^1{}_3SiO_{1/2})_k(R^1{}_2SiO_{2/2})_p(R^1SiO_{3/2})_q(SiO_{4/2})_r \qquad (1)$$

[wherein each $R^1$ is independently a group selected from monovalent hydrocarbon groups of 1 to 10 carbon atoms and groups of formula (2) below, with the proviso that at least one of all the $R^1$ groups is a group of formula (2) below; k, p, q and r are numbers such that $k > 0$, $p \geq 0$, $q \geq 0$ and $r \geq 0$, with the proviso that $k+p+q \geq 2$; and the respective siloxane units shown in parentheses are bonded in any order

[Chem. 1]

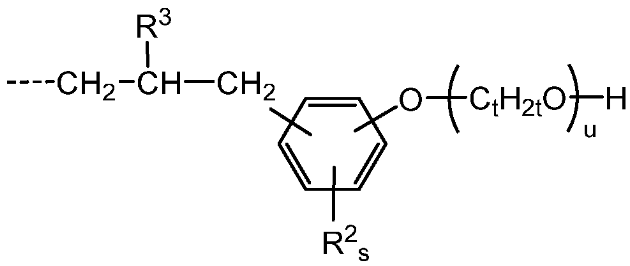

(2)

(wherein each $R^2$ is independently a hydrogen atom or a group selected from monovalent hydrocarbon groups of 1 to 5 carbon atoms and alkoxy groups of 1 to 5 carbon atoms, $R^3$ is a hydrogen atom or a methyl group, s is an integer from 0 to 4, t is an integer from 2 to 4, u is a number from 1 to 3, and the dashed line represents an available bond)],

(B) an isocyanate compound having two or more isocyanate groups per molecule, and

(C) an organic compound having two or more functional groups capable of reacting with isocyanate groups per molecule;

2. The siloxane-modified polyurethane composition of 1 above, wherein the group of formula (2) is a group of any of formulas (3) to (5) below

[Chem. 2]

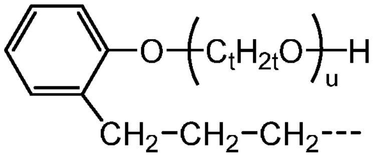

(3)

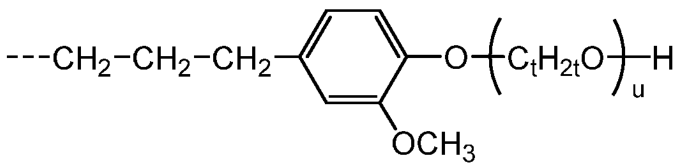

(4)

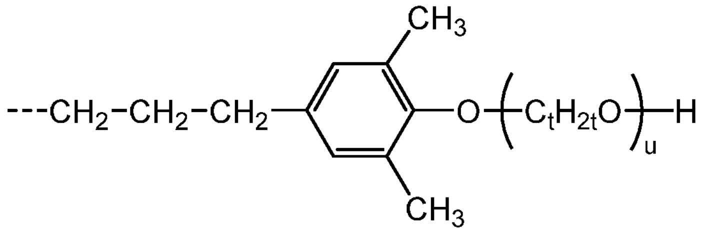

(5)

(wherein t and u are the same as above, and a dashed line represents an available bond);

3. The siloxane-modified polyurethane composition of 1 or 2 above wherein, in formula (1) of component (A), k is a number from 2 to 5, p is a number from 2 to 100, q is a number from 0 to 3, r is 0, and from 2 to 5 of all the $R^1$ groups are groups of formula (2);

4. The siloxane-modified polyurethane composition of any of 1 to 3 above, wherein component (A) is the product of an addition reaction between an organohydrogenpolysiloxane of general formula (6) below

$$(R^4{}_3SiO_{1/2})_k(R^4{}_2SiO_{2/2})_p(R^4SiO_{3/2})_q(SiO_{4/2})_r \qquad (6)$$

(wherein each $R^4$ is independently a hydrogen atom or a monovalent hydrocarbon group of 1 to 10 carbon atoms, with the proviso that at least one of all the $R^4$ groups is a hydrogen atom; k, p, q and r are the same as above; and the respective siloxane units shown in parentheses are bonded in any order) and a compound of general formula (7) below containing a hydroxyl group and an aliphatic unsaturated group

[Chem. 3]

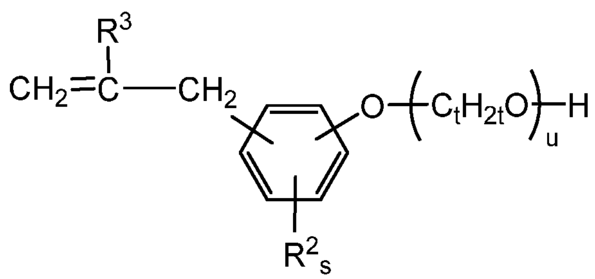

(7)

(wherein $R^2$, $R^3$ s, t and u are the same as above);

5. The siloxane-modified polyurethane composition of 4 above, wherein the compound of formula (7) having a hydroxyl group and an aliphatic unsaturated group is a compound of any of formulas (8) to (10) below

[Chem. 4]

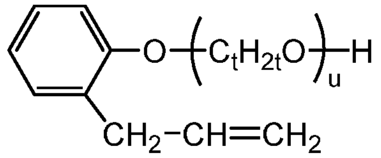

(8)

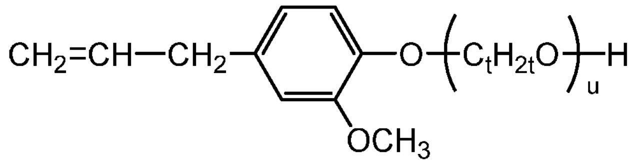

(9)

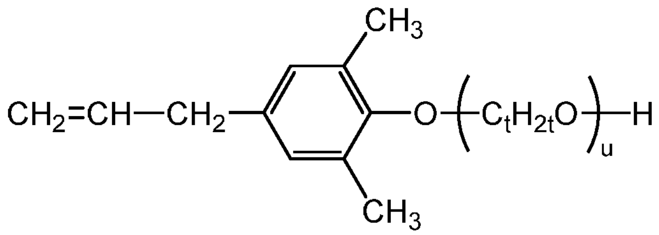

(10)

(wherein t and u are the same as above);

6. The siloxane-modified polyurethane composition of 4 or 5 above wherein, in formula (6), k is a number from 2 to 5, p is a number from 2 to 100, q is a number from 0 to 3, r is 0 and from 2 to 5 of all the $R^4$ groups are hydrogen atoms;

7. The siloxane-modified polyurethane composition of any of 1 to 6 above, wherein component (B) is a compound of formula (11) below

OCN-Q-NCO (11)

(wherein Q is a substituted or unsubstituted divalent hydrocarbon group of 1 to 20 carbon atoms);

8. The siloxane-modified polyurethane composition of 7 above wherein, in formula (11), Q is a linear or branched alkylene group or an alkylene group having an alicyclic structure;

9. The siloxane-modified polyurethane composition of any of 1 to 8 above, wherein the functional groups on component (C) that are capable of reacting with isocyanate groups are groups selected from hydroxyl, amino, carboxyl and mercapto groups;

10. A heat-cured form of the siloxane-modified polyurethane composition of any of 1 to 9 above; and

11. The heat-cured siloxane-modified polyurethane composition of 10 above which has thermoplasticity.

ADVANTAGEOUS EFFECTS OF INVENTION

The siloxane-modified polyurethane composition of the invention is easy to prepare and is able to give a cured product that has resin property values such as tensile strength which are higher than in the prior-art and also has an excellent heat resistance.

DESCRIPTION OF EMBODIMENTS

The invention is described in detail below.

The siloxane-modified polyurethane composition of the invention includes components (A) to (C) below.

(A) a hydroxyl group-containing organosilicon compound of formula (1) below,

(B) an isocyanate compound having two or more isocyanate groups per molecule, and

(C) an organic compound having on the molecule two or more functional groups capable of reacting with isocyanate

groups.

[Component (A)]

Component (A) is a hydroxyl group-containing organosilicon compound of formula (1) below.

$$(R^1{}_3SiO_{1/2})_k(R^1{}_2SiO_{2/2})_p(R^1SiO_{3/2})_q(SiO_{4/2})_r \qquad (1)$$

In formula (1), each $R^1$ is independently a group selected from monovalent hydrocarbon groups of 1 to 10 carbon atoms and groups of formula (2) below, provided that at least one of all the $R^1$ groups is an organic group of formula (2) below. Preferably, from 2 to 5 of all the $R^1$ groups are organic groups of formula (2) below.

[Chem. 5]

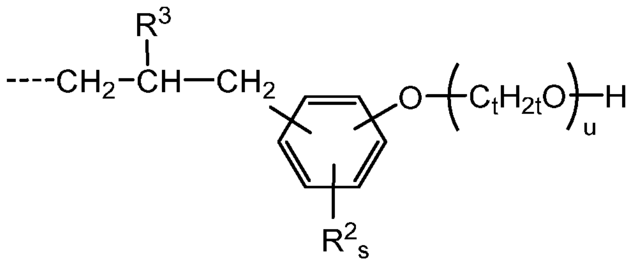

(2)

In formula (2), the dashed line represents an available bond.

The monovalent hydrocarbon groups of 1 to 10 carbon atoms represented by $R^1$ may be linear, branched or cyclic. Examples include alkyl groups of 1 to 10 carbon atoms, preferably 1 to 6 carbon atoms and more preferably 1 to 3 carbon atoms; cycloalkyl groups of 5 to 10 carbon atoms, and preferably 5 to 8 carbon atoms; aryl groups of 6 to 10 carbon atoms, preferably 6 to 8 carbon atoms; and aralkyl groups of 7 to 10 carbon atoms.

Specific examples of the monovalent hydrocarbon groups of $R^1$ include alkyl groups such as methyl, ethyl, n-propyl, isopropyl, n-butyl, isobutyl, s-butyl, t-butyl, n-pentyl, n-hexyl, n-heptyl, n-octyl, n-nonyl and n-decyl groups; cycloalkyl groups such as cyclopentyl and cyclohexyl groups; aryl groups such as phenyl and tolyl groups; and aralkyl groups such as benzyl and phenethyl groups.

Of these, methyl, ethyl and phenyl groups are preferred as the $R^1$ groups.

In Formula (2), each $R^2$ is independently a hydrogen atom or a group selected from monovalent hydrocarbon groups of 1 to 5 carbon atoms and alkoxy groups of 1 to 5 carbon atoms.

The monovalent hydrocarbon groups of 1 to 5 carbon atoms represented by $R^2$ may be linear or branched. Specific examples include, of the groups mentioned for $R^1$, groups similar to the linear or branched groups of 1 to 5 carbon atoms. Of these, methyl, isopropyl and t-butyl groups are preferred.

The alkoxy groups of 1 to 5 carbon atoms represented by $R^2$ are preferably ones having from 1 to 3 carbon atoms. Specific examples include methoxy, ethoxy, n-propoxy, isopropoxy, n-butoxy and n-pentoxy groups. Of these, methoxy and ethoxy groups are preferred.

$R^3$ is a hydrogen atom or a methyl group.

In formula (2), s is an integer from 0 to 4, preferably an integer from 0 to 2.

The letter ‘t’ is an integer from 2 to 4, and is preferably 2 or 3.

The letter ’u’ is a number from 1 to 3. The recurring units within parentheses to which ’u’ is attached may be chemically a single recurring unit or may be a combination of differing recurring units the average value of which is a number from 1 to 3. When u is 0, the hydroxyl group is phenolic and the reactivity to isocyanate groups, for example, is low. Hence, u is 1 or more. Instances in which there is a combination of differing recurring units are also not included when u is 0. When u is more than 3, the heat resistance decreases, and so instances in which u is 4 or more are also not included. Hence, u is a number from 1 to 3. It is especially preferable for the recurring units within parentheses to which ’u’ is attached to be chemically a single recurring unit.

Examples of groups of formula (2) include, but are not limited to, those having the following formulas.

[Chem. 6]

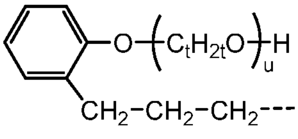

(3)

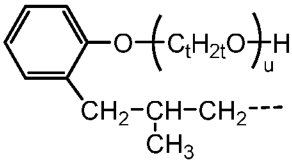

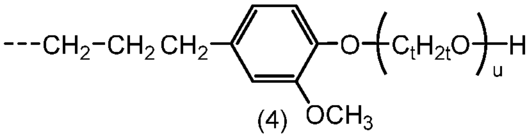

(4)

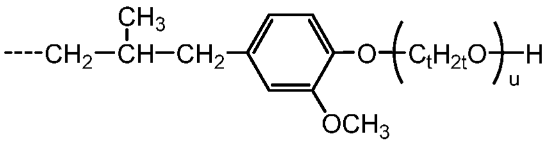

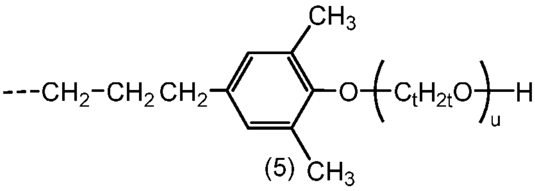

(5)

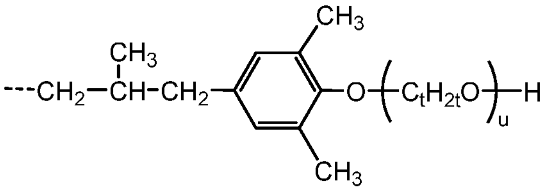

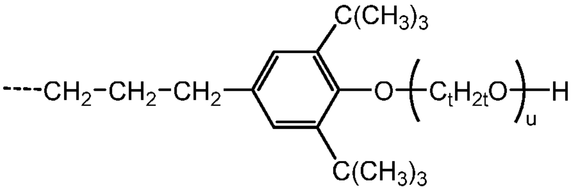

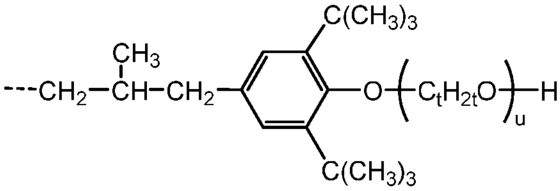

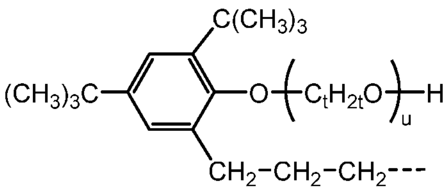

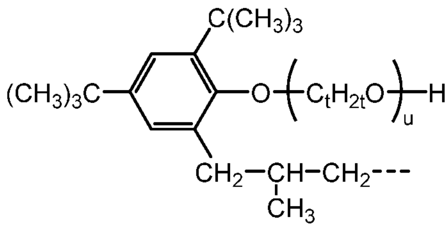

In these formulas, t and u are the same as above, and a dashed line represents an available bond.

Of the above groups, those of formulas (3) to (5) are preferred.

[Chem. 7]

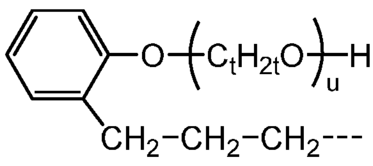

(3)

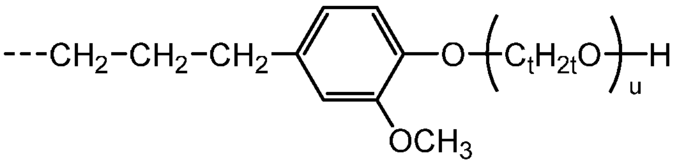

(4)

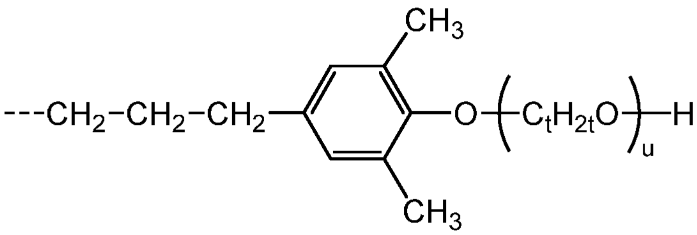

(5)

In these formulas, t and u are the same as above, and a dashed line represents an available bond.

Specific examples of the groups of formulas (3) to (5) include, but are not limited to, those having the following formulas. Of these, groups of formulas (3a), (4a) to (4e) and (5a) are preferred.

[Chem. 8]

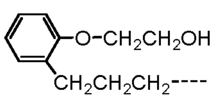
(3a)
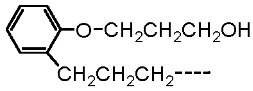
(3b)
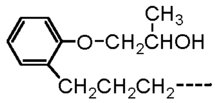
(3c)
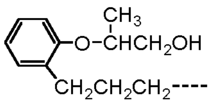
(3d)
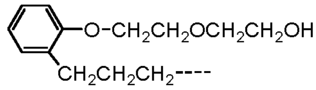
(3e)
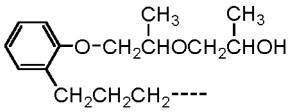
(3f)
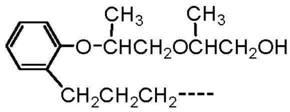
(3g)
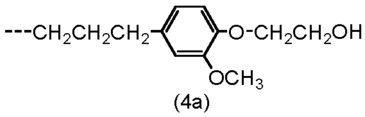
(4a)
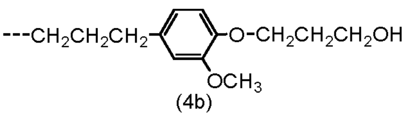
(4b)
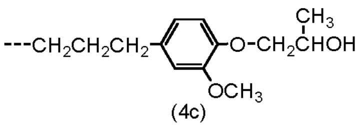
(4c)
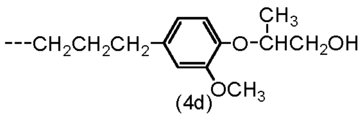
(4d)
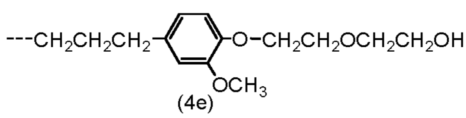
(4e)
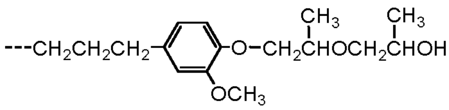
(4f)
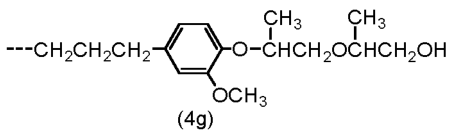
(4g)
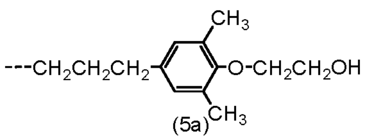
(5a)
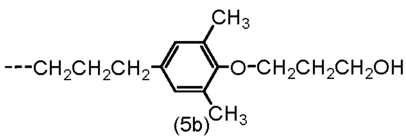
(5b)
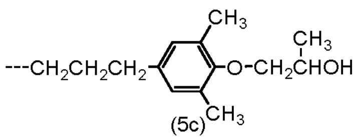
(5c)
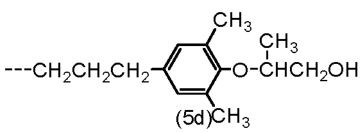
(5d)
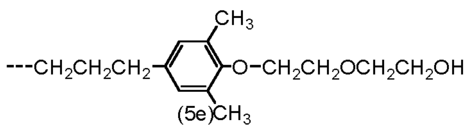
(5e)
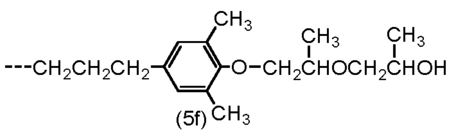
(5f)
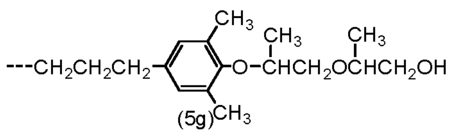
(5g)

In these formulas, a dashed line represents an available bond.

In Formula (1), k, p, q and r are numbers such that k > 0, p ≥ 0, q ≥ 0 and r ≥ 0, with the proviso that k+p+q ≥ 2.

The letter 'k' is preferably a number from 2 to 5, and more preferably a number from 2 to 4.

The letter 'p' is preferably a number from 2 to 100, and more preferably a number from 5 to 80.

The letter 'q' is preferably a number from 0 to 3, more preferably a number from 0 to 2, and even more preferably 1 or 2.

The letter 'r' is preferably a number from 0 to 3, more preferably 0 or 1, and even more preferably 0.

The sum k+p+q is preferably a number such that k+p+q ≥ 5, and more preferably a number such that k+p+q is ≥ 8.

The bonding order of the respective siloxane units shown in parentheses above is not particularly limited; these may be randomly bonded, or a block structure may be formed.

The hydroxyl group-containing organosilicon compound used in the invention is preferably one where, in above formula (1), k is a number from 2 to 5, p is a number from 2 to 100, q is a number from 0 to 3, r is 0 and from 2 to 5 of all the $R^1$

groups are groups of formula (2); and more preferably one where k is a number from 2 to 4, p is a number from 5 to 80, q is a number from 0 to 2, r is 0 and 2 or 3 of all the $R^4$ groups are groups of formula (2).

The groups of formula (2) may be located either at one or both ends of the molecular chain or partway along the molecular chain, or may be located at both such places. However, it is preferable for these groups to be located at least at one or both ends of the molecular chain, and more preferable for them to be located at both ends of the molecular chain.

It is especially preferable for the hydroxyl group-containing organosilicon compound used in the invention to be one having any of the following formulas.

[Chem. 9]

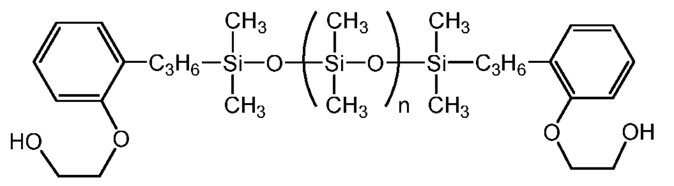

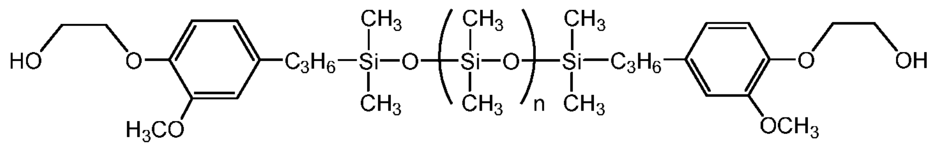

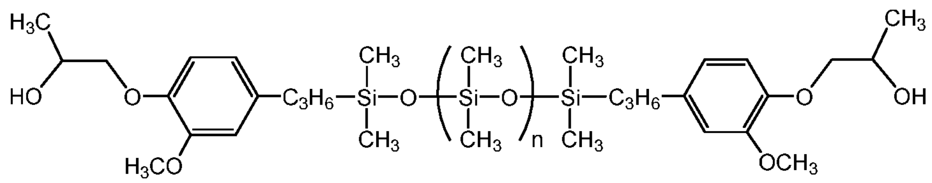

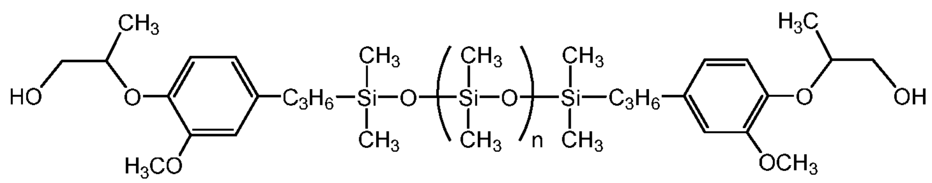

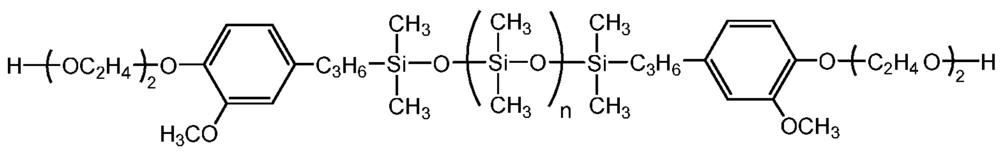

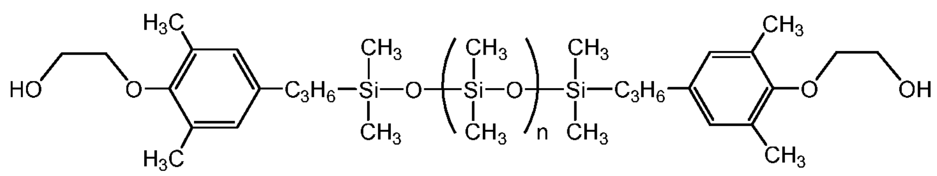

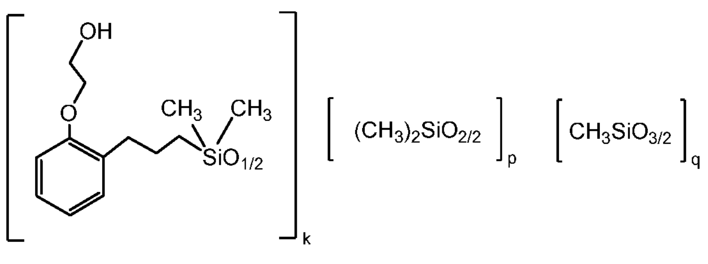

(wherein n is a number such that $n \geq 0$, and k, p and q are the same as above).

The hydroxyl group-containing organosilicon compound used in the invention has a weight-average molecular weight that is preferably from 400 to 15,000, more preferably from 600 to 10,000, even more preferably from 600 to 8,000, and especially from 600 to 5,000. This weight-average molecular weight is a polystyrene equivalent value obtained by gel permeation chromatography (GPC) measured under the following conditions.

[Measurement Conditions]

| | |
|---|---|
| Developing solvent: | tetrahydrofuran (THF) |
| Flow rate: | 0.6 mL/min |
| Detector: | differential refractive index detector (RI) |
| Columns: | TSK Guardcolumn SuperH-H<br>TSKgel SuperHM-N (6.0 mm I.D. × 15 cm column× 1)<br>TSKgel SuperH2500 (6.0 mm I.D. × 15 cm column× 1) (all products of Tosoh Corporation) |
| Column temperature: | 40°C |
| Amount of sample injected: | 50 μL (0.3 wt% concentration THF solution) |

The hydroxyl group-containing organosilicon compound used in the invention has a kinematic viscosity that is preferably from 40 to 10,000 $mm^2/s$, and more preferably from 50 to 5,000 $mm^2/s$. The method for measuring the kinematic viscosity is described later in this Specification.

The hydroxyl group-containing organosilicon compound used in the invention can be obtained by the hydrosilylation of an organohydrogenpolysiloxane of general formula (6) below with a compound of general formula (7) below having a hydroxyl group and an aliphatic unsaturated group (allyl group or methallyl group).

A compound of formula (6) below may be used as the organohydrogenpolysiloxane.

$$(R^4{}_3SiO_{1/2})_k(R^4{}_2SiO_{2/2})_p(R^4SiO_{3/2})_q(SiO_{4/2})_r \qquad (6)$$

In formula (6), each $R^4$ is independently a hydrogen atom or a monovalent hydrocarbon group of 1 to 10 carbon atoms, provided that at least one of all the $R^4$ groups is a hydrogen atom. Preferably, from 2 to 5 of all the $R^4$ groups are hydrogen atoms.

Examples of the monovalent hydrocarbon groups represented by $R^4$ include groups similar to those mentioned above for $R^1$. Of these, methyl, ethyl and phenyl groups are preferred.

The letters k, p, q and r are the same as above.

The bonding order of the respective siloxane units shown in parentheses is not particularly limited; the units may be bonded randomly or a block structure may be formed.

The organohydrogenpolysiloxane is preferably one where, in formula (6), k is a number from 2 to 5, p is a number from 2 to 100, q is a number from 0 to 3, r is 0, and from 2 to 5 of all the $R^4$ groups are hydrogen atoms; and is more preferably one where k is a number from 2 to 4, p is a number from 5 to 80, q is a number from 0 to 2, r is 0, and 2 or 3 of all the $R^4$ groups are hydrogen atoms.

The hydrogen atoms may be located either at one or both ends of the molecular chain or partway along the molecular chain, or may be located at both such places. However, it is preferable for the hydrogen atoms to be located at least at one or both ends of the molecular chain, and more preferable for the hydrogen atoms to be located at both ends of the molecular chain.

Specific examples of organohydrogenpolysiloxanes of formula (6) include 1,1,3,3-tetramethyldisiloxane, dimethylpolysiloxane capped at both ends of the molecular chain with dimethylhydrogensiloxy groups, methylhydrogenpolysiloxane capped at both ends of the molecular chain with dimethylhydrogensiloxy groups, methylhydrogensiloxane/dimethylsiloxane copolymers capped at both ends of the molecular chain with dimethylhydrogensiloxy groups, methylhydrogensiloxane/diphenylsiloxane copolymers capped at both ends of the molecular chain with dimethylhydrogensiloxy groups, methylhydrogensiloxane/dimethylsiloxane/diphenylsiloxane copolymers capped at both ends of the molecular chain with dimethylhydrogensiloxy groups, copolymers comprising $(CH_3)_3SiO_{1/2}$ units, $(CH_3)_2HSiO_{1/2}$ units, $(CH_3)_2SiO$ units and $CH_3SiO_{3/2}$ units, copolymers comprising $(CH_3)_2HSiO_{1/2}$ units, $(CH_3)_2SiO$ units and $CH_3SiO_{3/2}$ units, copolymers comprising $(CH_3)_2HSiO_{1/2}$ units, $(C_6H_5)_2SiO$ units, $(CH_3)_2SiO$ units and $CH_3SiO_{3/2}$ units, copolymers comprising $(CH_3)(C_6H_5)HSiO_{1/2}$ units, $(CH_3)_2SiO$ units and $CH_3SiO_{3/2}$ units, and copolymers comprising $(CH_3)_2HSiO_{1/2}$

units, $(CH_3)_2SiO$ units and $C_6H_5SiO_{3/2}$ units. One of these may be used alone or two or more may be used together.

Of these, dimethylpolysiloxanes capped at both ends of the molecular chain with dimethylhydrogensiloxy groups and copolymers comprising $(CH_3)_2HSiO_{1/2}$ units, $(CH_3)_2SiO$ units and $CH_3SiO_{3/2}$ units are preferred.

A compound of formula (7) below may be used as the compound having a hydroxyl group and an aliphatic unsaturated group.

[Chem. 10]

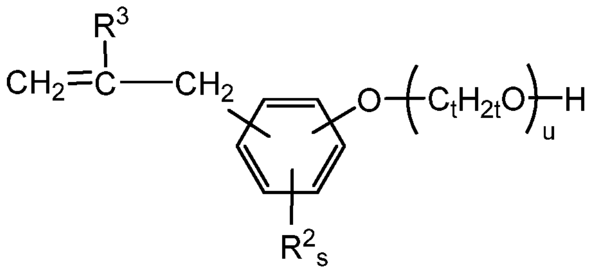

(7)

(wherein $R^2$, $R^3$, s, t and u are the same as above).

Non-limiting examples of the group of formula (7) include those of the following formulas. One of these may be used alone or two or more may be used together.

[Chem. 11]

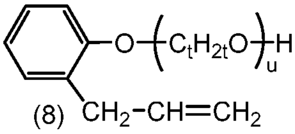
(8)

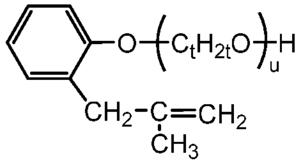

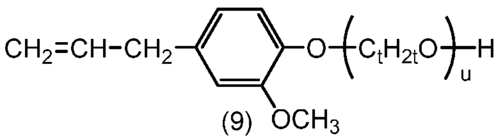
(9)

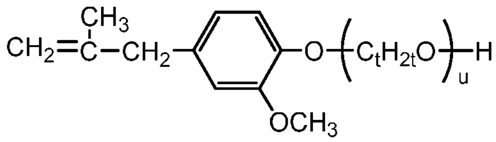

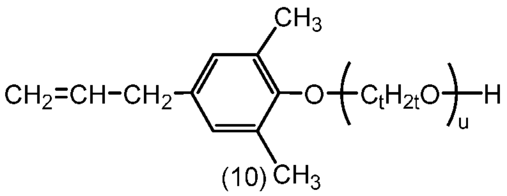
(10)

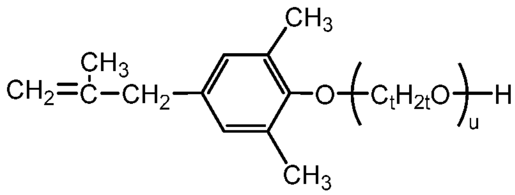

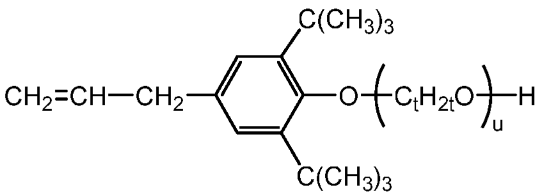

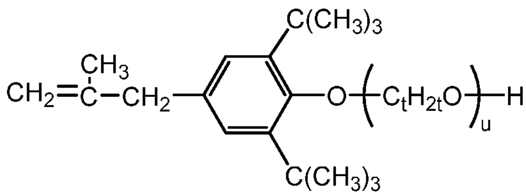

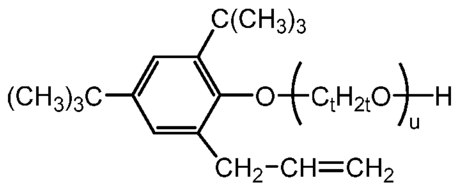

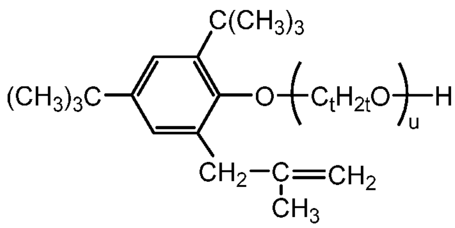

In these formulas, t and u are the same as above.

Of these, the compounds of formulas (8) to (10) below are preferred.

[Chem. 12]

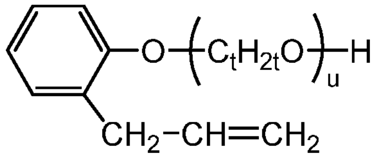

(8)

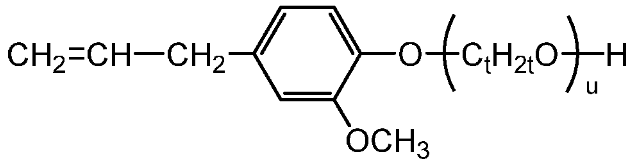

(9)

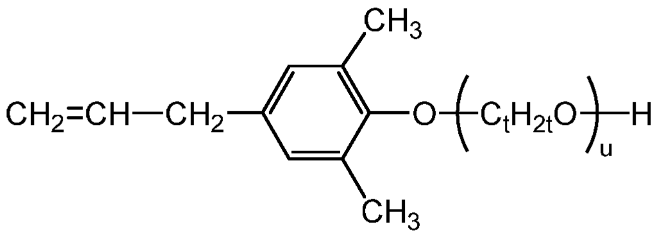

(10)

(wherein t and u are the same as above).

Specific examples of groups of formulas (8) to (10) include, but are not limited to, those of the following formulas. Of these, the compounds of formulas (8a), (9a) to (9e) and (10a) are preferred.

[Chem. 13]

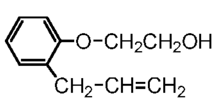
(8a)

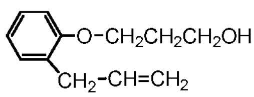
(8b)

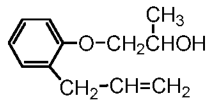
(8c)

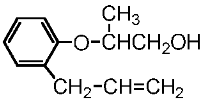
(8d)

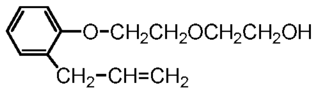
(8e)

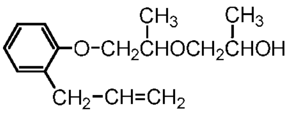
(8f)

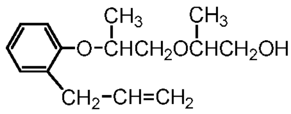
(8g)

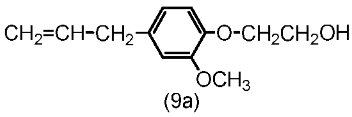
(9a)

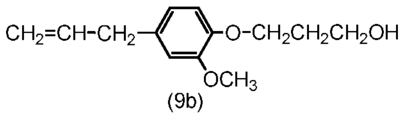
(9b)

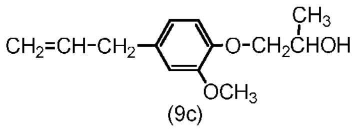
(9c)

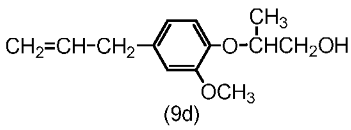
(9d)

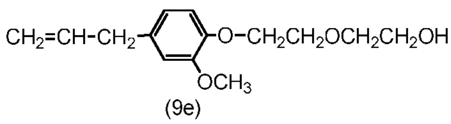
(9e)

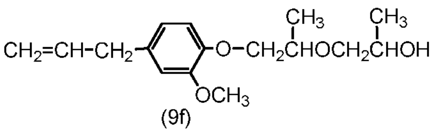
(9f)

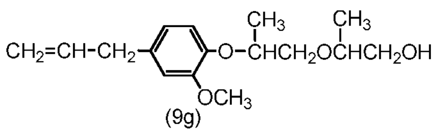
(9g)

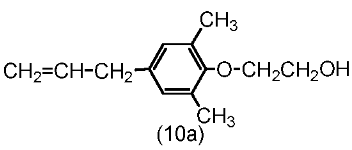
(10a)

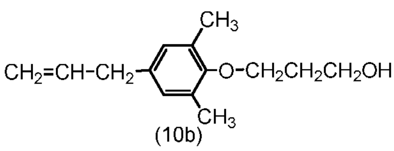
(10b)

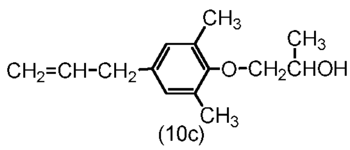
(10c)

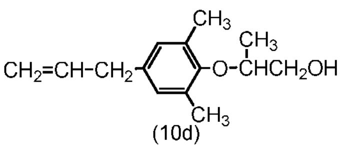
(10d)

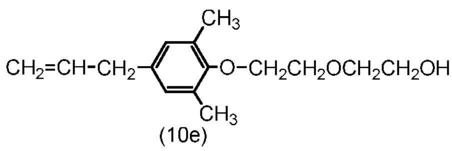
(10e)

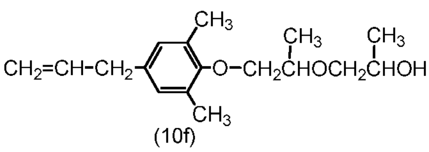
(10f)

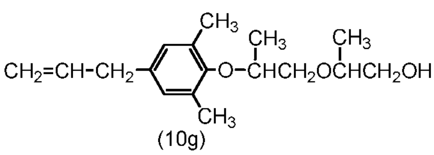
(10g)

The compound of formula (7) having a hydroxyl group and an aliphatic unsaturated group can be obtained by, for example, the following methods.

In cases where a phenol compound having an allyl group on the molecule that is readily available as a commercial product, such as o-allylphenol or eugenol (2-methoxy-4-allylphenol), is used as a starting material, the desired compound can be obtained by using a known method to effect the addition reaction of a given amount of, for example, ethylene oxide, propylene oxide, butylene oxide or tetrahydrofuran, or a mixture of these, with a phenolic hydroxyl group.

Alternatively, in cases where a phenol compound such as phenol, 2,6-dimethylphenol, 2,4-di-t-butylphenol or 2,6-di-t-butylphenol is used as a starting material, allyl (or methallyl) phenyl ether is obtained by first using a known method to react a halogenated allyl compound such as allyl bromide, allyl chloride or methallyl chloride with these phenol

compounds under basic conditions.

Next, a thermal rearrangement reaction is carried out on the allyl group, giving allylated (or methallylated) phenol. The desired compound can be obtained by, in the same way as described above, addition reacting this with a given amount of, for example, ethylene oxide, propylene oxide, butylene oxide or tetrahydrofuran, or a mixture thereof.

Because the thermal rearrangement reaction on the allyl group arises at the ortho position or para position, in order to obtain a high-purity product, it is more preferable to use a compound such as 2,6-dimethylphenol, 2,4-di-t-butylphenol or 2,6-d-t-butylphenol in which, of the ortho positions and para positions, only one position is vacant.

In the reaction of an organohydrogenpolysiloxane with a compound having a hydroxyl group and an aliphatic unsaturated group, the hydroxyl group and aliphatic unsaturated group-containing compound is furnished to the reaction in an amount that is preferably a molar ratio representing an excess number of moles of aliphatic unsaturated groups (ally groups or methallyl groups) on the hydroxyl and aliphatic unsaturated group-containing compound with respect to the number of moles of hydrosilyl groups on the organohydrogenpolysiloxane.

For example, it is desirable for the molar ratio to be such that the number of moles of aliphatic unsaturated groups per mole of hydrosilyl groups is preferably from 1 to 5, more preferably from 1 to 2, and even more preferably from 1 to 1.5. At less than 1 mole, the amount of aliphatic unsaturated groups may be inadequate and dehydrogenation may readily arise. On the other hand, at more than 5 moles, a large amount of the hydroxyl group and aliphatic unsaturated group-containing compound remains unreacted in the reaction system, which is sometimes uneconomical.

Hydrosilylation between the organohydrogenpolysiloxane of above formula (6) and the hydroxyl group and aliphatic unsaturated group-containing compound of above formula (7) is preferably carried out in the presence of a catalyst. The catalyst is not particularly limited; a known addition reaction catalyst may be used.

Exemplary catalysts include uncombined platinum group metals such as platinum (including platinum black), palladium, rhodium and ruthenium, and metal catalysts containing these platinum group metals or gold, nickel, cobalt and the like. Of these, a catalyst containing platinum, palladium or rhodium is especially preferred.

Specific examples of catalysts containing platinum, palladium or rhodium include $PtCl_4$, $H_2PtCl_6 \cdot 6H_2O$, Pt-ether complexes, Pt-olefin complexes, $PdCl_2(PPh_3)_2$, $PdCl_2(PhCN)_2$, $RhCl_2(PPh_3)_3$ (in the formulas, Ph stands for a phenyl group), and complexes of platinum chloride, chloroplatinic acid or a salt of chloroplatinic acid with a vinyl group-containing siloxane. One of these catalysts may be used alone, or mixtures of two or more may be used.

Of these, a platinum-containing metal catalyst is more preferred. A Karstedt catalyst (a complex of 1, 1,3,3-tetramethyl-1,3-divinyldisiloxane with sodium bicarbonate-neutralized chloroplatinic acid) is especially preferred.

If necessary, these catalysts may be used after dilution with a solvent such as an alcohol, aromatic compound, hydrocarbon, ketone or the like.

The amount of catalyst is not particularly limited, so long as it is a catalytic amount. A catalytic amount is an amount sufficient to cause the addition reaction to proceed. For example, the amount of the above metal catalyst, in terms of the main metal therein, per 100 parts by weight of the hydrogenpolysiloxane is preferably 0.02 part by weight or less, more preferably from 0.00001 to 0.02 part by weight, even more preferably from 0.0001 to 0.01 part by weight, and most preferably from 0.0003 to 0.005 part by weight.

The entire amount of catalyst may be added at the start of the reaction, or the catalyst may be added in divided amounts during the course of the reaction.

The reaction can be made to proceed even with a small amount of catalyst. However, when the amount of catalyst is too small, the reaction rate may become too slow. Hence, the amount is preferably at or greater than the lower limit value mentioned above. The reaction rate does not particularly improve when the amount of catalyst is excessive, and so too much catalyst may be uneconomical.

When much residual metal catalyst is present in the resulting hydroxyl group-containing siloxane, this may cause discoloration. Hence, it is preferable for the amount of residual metal catalyst to be low. In the preparation method of the invention, the amount of metal catalyst present in the resulting hydroxyl group-containing siloxane, expressed in terms of the amount of atoms of the main metal per 100 parts by weight of the siloxane, may be set to preferably 0.02 part by weight or less, more preferably 0.01 part by weight or less, and even more preferably 0.005 part by weight or less.

Following completion of the addition reaction, residual metal catalyst may be adsorbed and removed by means of, for example, activated carbon.

Unlike methods for synthesizing known hydroxyalkyl group-containing polysiloxanes, one characteristic of the hydrosilylation reaction between an organohydrogenpolysiloxane and a hydroxyl group and aliphatic unsaturated group-containing compound in this invention is that it can be carried out without the use of a solvent, although a solvent may be used if necessary, provided that doing so does not adversely affect the object of the invention.

Specific examples of the solvent include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF) and acetonitrile.

When a solvent is used, the solvent may or may not be removed by distillation following completion of the addition reaction.

The hydrosilylation reaction temperature is preferably between 20°C and 200°C, more preferably between 40°C and 180°C, and even more preferably between 60°C and 150°C. The reaction time is preferably up to 20 hours, more preferably up to 12 hours, and even more preferably up to 8 hours.

[Component (B)]

Component (B) is an isocyanate compound having two or more isocyanate groups per molecule. Component (B) is not particularly limited so long as it has two or more isocyanate groups per molecule, and is exemplified by compounds of formula (11) below

OCN-Q-NCO (11)

(wherein Q is a substituted or unsubstituted divalent hydrocarbon group of 1 to 20 carbon atoms).

Examples of the divalent hydrocarbon group represented by Q include linear or branched alkylene groups of preferably 1 to 15 carbon atoms, more preferably 1 to 10 carbon atoms, and even more preferably 1 to 8 carbon atoms; cycloalkylene groups of preferably 3 to 10 carbon atoms, and more preferably 3 to 6 carbon atoms; alkylene groups having an alicyclic structure of preferably 4 to 15 carbon atoms, and more preferably 4 to 13 carbon atoms; arylene groups of preferably 6 to 15 carbon atoms, and more preferably 6 to 10 carbon atoms; and aralkylene groups of preferably 7 to 15 carbon atoms, and more preferably 7 to 13 carbon atoms. Additional examples include groups that are combinations of these.

Of these, Q is preferably a linear or branched alkylene group, an alkylene group having an alicyclic structure or an aralkylene group, and is more preferably a linear or branched alkylene group or an alkylene group having an alicyclic structure.

Specific examples of alkylene groups include methylene, ethylene, trimethylene, propylene, tetramethylene, pentamethylene, hexamethylene, heptamethylene, octamethylene, nonamethylene, decamethylene, dodecamethylene and tetradecamethylene groups.

Specific examples of cycloalkylene groups include cyclopentylene and cyclohexylene groups.

The alkylene groups having an alicyclic structure are preferably alkylene groups having a saturated alicyclic structure. Specific examples include methylene cyclohexylene and methylene biscyclohexylene groups.

Specific examples of arylene groups include phenylene and naphthalene groups.

Specific examples of aralkylene groups include methylenephenylene and methylenebisphenylene groups.

Some of the hydrogen atoms on these groups may be replaced with other substituents. Examples of such other substituents include alkyl groups of 1 to 3 carbon atoms such as methyl and ethyl groups, alkoxy groups of 1 to 3 carbon atoms such as methoxy and ethoxy groups, halogen atoms such as chlorine and bromine, and carboxyl groups.

Specific examples of the isocyanate compound of formula (11) above include diisocyanate compounds such as 2,4-tolylene diisocyanate, 2,6-tolylene diisocyanate, m-phenylene diisocyanate, p-phenylene diisocyanate, 4,4'-diphenylmethane diisocyanate (MDI), 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate and 3,3'-dimethyl-4,4'-dicyclohexylmethane diisocyanate.

Isocyanate compounds such as polymeric MDI, reaction products of the above diisocyanate compounds with trimethylolpropane, and trimers of the above isocyanate compounds may also be used as component (B).

Component (B) may be of one type used alone, or two or more may be used in admixture.

Of these, 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 1,6-hexamethylene diisocyanate, xylylene diisocyanate, isophorone diisocyanate and 4,4'-dicyclohexylmethane diisocyanate are preferred.

[Component (C)]

Component (C) is an organic compound having two or more functional groups capable of reacting with isocyanate groups per molecule. Examples of functional groups capable of reacting with isocyanate groups include hydroxyl groups, amino groups, carboxyl groups and mercapto groups. Component (C) is not particularly limited so long as it has two or more such functional groups per molecule, although an organic compound having hydroxyl groups or amino groups is preferred.

Specific examples of component (C) include polyols (diols) such as ethylene glycol, 1,2-propanediol, 1,3-propanediol, 1,4-butanediol, 1,3-butanediol, 1,2-butanediol, 2,3-butanediol, 1,5-pentanediol, 1,4-pentanediol, 1,3-pentanediol, 1,2-pentanediol, 2,5-pentanediol, 2,4-pentanediol, 2,3-pentanediol, 1,6-hexanediol, 1,5-hexanediol, 1,4-hexanediol, 1,3-hexanediol, 1,2-hexanediool, 2,6-hexanediol, 2,5-hexanediol, 2,4-hexanediol, 2,3-hexanediol, 1,4-cyclohexanediol, 1,4-cyclohexandimethanol (1,4-dihydroxymethylcyclohexane), 1,8-octanediol, 1,9-nonanediol, 1,10-decanediol, neopentyl glycol and methylpentanediol.

Additional examples include trifunctional alcohols such as glycerol and trimethylolpropane; tetrafunctional alcohols such as pentaerythritol and α-methylglycoside; hexafunctional alcohols such as sorbitol and sucrose; alkanolamines such as monoethanolamine, diethanolamine and triethanolamine; and diamines such as ethylenediamine, diaminotoluene, diphenylmethanediamine, 3,3'-dichloro-4,4'-diaminodiphenylmethane, 4,4'-methylenebis(2,6-diethylaniline), 4,4'-methylenebis(2-ethyl-6-methylaniline), diethylmethylbenzenediamine, 4,6-diethyl-2-methyl-1,3-phenylenediamine, 2-methyl-4,6-bis(methylthio)-1,3-benzenediamine, 4-methyl-2,6-bis(methylthio)-1,3-benzenediamine, bis(4-amino-2,3-dichlorophenyl)methane (TCDAM), trimethylenebis(4-aminobenzoate) and isophorone diamine.

These may be used singly, or two or more may be used in admixture.

Of these, polyols (diols) and diamines are preferred; 1,4-butanediol, 1,4-cyclohexanedimethanol (1,4-dihydroxymethylcyclohexane) and isophorone diamine are especially preferred.

Components (A) to (C) are compounded in amounts such that the ratio expressed as "(total number of isocyanate groups included in component (B))/(total number of hydroxyl groups and amino groups included in components (A) and (C))" is preferably from 0.7 to 1.4, more preferably from 0.8 to 1.2, even more preferably from 0.9 to 1.1, and especially from 0.95 to 1.05.

[Other Ingredients]

In addition to components (A) to (C), the inventive composition may also include other ingredients within ranges that do not detract from the advantageous effects of the invention. Examples of such other ingredients include polyols, catalysts, antioxidants, ultraviolet absorbers, light stabilizers and solvents.

Examples of polyols include, aside from component (C), polyether polyols, polyester polyols and polycarbonate polyols. Specific examples include the following which can be obtained by polymerizing or copolymerizing an alkylene oxide or a cyclic ether: polyethylene glycol, polypropylene glycol, polyethylene glycol-polytetramethylene glycol, polytetramethylene ether glycol, polytetramethylene glycol and polyhexamethylene glycol.

Examples of catalysts include amine compounds such as triethylamine, N,N-dimethylcyclohexylamine, N,N,N',N'-tetramethylethylenediamine, N,N,N',N'-tetramethylhexamethylenediamine, N,N,N',N",N"-pentamethyldiethylenetriamine, N,N,N',N",N"-pentamethyldipropylenetriamine, triethylenediamine, N-methyl-N'-(2-dimethylaminoethyl)piperazine, N-ethylmorpholine, 1,2-dimethylimidazole, dimethylethanolamine, dimethylaminoethoxyethanol, N,N,N'-trimethylaminoethylethanolamine, N-methyl-N'-(2-hydroxyethyl)piperazine and bis(2-dimethylaminoethyl) ether; organotitanium compounds such as tetraisopropoxytitanium, tetra-n-butoxytitanium, tetra-t-butoxytitanium, titanium diisopropoxide bis(acetylacetonate), titanium tetra-2-ethyl hexoxide and titanium diisopropoxide bis(ethylacetoacetate); organic zirconium compounds such as zirconium tetrabutoxide, zirconium tetrapropoxide, tetrakis(2,4-pentanedionato)zirconium and dibutoxyzirconium bis(ethylacetoacetate); and organotin compounds such as dibutyltin diacetate and dibutyltin dilaurate.

Examples of antioxidants include hindered phenol-based antioxidants, amine-based antioxidants, phosphorus-based antioxidants and sulfur-based antioxidants.

Examples of ultraviolet absorbers include benzotriazole-type ultraviolet absorbers, triazine-type ultraviolet absorbers, benzophenone-type ultraviolet absorbers and benzoate-type ultraviolet absorbers.

Examples of light stabilizers include hindered amine-based light stabilizers.

Examples of solvents include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF), acetonitrile, methanol, ethanol, 1-propanol, 2-propanol, 1-butanol, 2-butanol, N-methyl-2-pyrrolidone (NMP), 1,3-dimethyl-2-imidazolidinone, N,N-dimethylacetamide (DMAc), ethyl acetate, butyl acetate and water.

Amino di-terminated organopolysiloxanes such as dimethylpolysiloxane having amino groups at both ends of the molecular chain can also be used.

The siloxane-modified polyurethane composition of the invention can be obtained by mixing together the above-described ingredients in the usual manner. The other ingredients may be added to components (A) to (C) at any time and in any order.

The method for preparing a resin from the siloxane-modified polyurethane composition of the invention (synthesis method) is not particularly limited. Use can be made of processes that have hitherto been employed to prepare polyurethane resins, such as the prepolymer process or the one-shot process.

In the prepolymer process, first component (A) and component (B) are reacted. The reaction temperature is

preferably between 10°C and 250°C, more preferably between 20°C and 150°C, and still more preferably between 50°C and 120°C. The reaction time is preferably from 10 minutes to 10 hours, and more preferably from 30 minutes to 5 hours.

Component (C) is then reacted. The reaction temperature and reaction time are the same as above.

The one-shot process is a method that reacts component (A), component (B) and component (C) at the same time. The reaction temperature is preferably between 10°C and 250°C, more preferably between 20°C and 150°C, and even more preferably between 50°C and 120°C. The reaction time is preferably from 10 minutes to 10 hours, and more preferably from 30 minutes to 5 hours.

The siloxane-modified polyurethane composition of the invention, by virtue of its composition, cures (heat cures) to form a resin or elastomer having thermoplasticity. However, with the use of a polyfunctional isocyanate compound having three or more functional groups or a polyhydric alcohol, it can also be rendered into a thermosetting composition. The inventive composition is preferably one which cures to form a resin or elastomer having thermoplasticity.

The molding method may be a method that involves, for example, cutting the composition into pellets in a twin-screw extruder and then processing the composition into a molded product with any of various types of commonly used molding machines, such as an extrusion molding machine, injection molding machine, calendaring machine or pressing machine.

The inventive composition can also be suitably used, either in a liquid state obtained by dissolution in an organic solvent or in a two-liquid, three-liquid or other liquid state in which the prepolymer and the chain-lengthening ingredient have been separated, as a primer coating agent or a top-coating agent for various types of plastics such as polyester, nylon, polyvinyl chloride, ABS, OPP or CPP. In addition, the composition can be used as coatings for elastomeric fibers and various other types of fibers, woven and knit materials made of various types of fibers, nonwoven fabric, paper, natural leather, artificial leather, synthetic leather, wood and the like, and as surface coating materials, sealants, office automation rollers, shoes, ski boots, adhesives, wood binders, thermoplastic elastomers and thermoset elastomers.

## EXAMPLES

Synthesis Examples, Examples and Comparative Examples are given below by way of illustration, although the invention is not limited by these Examples.

In the Examples below, property evaluations were carried out by the following methods.

The kinematic viscosity was measured by the method described in JIS Z 8803:2011 at a temperature of 25°C using the Cannon-Fenske viscometer.

The hydroxyl value was measured in accordance with JIS K 0070:1992.

The tensile strength was measured by the method in JIS K 7312:1996 at a test rate of 100 mm/min and using as the test specimen a No. 6 dumbbell die-cut from a 1 mm thick sheet of the cured composition.

The heat resistance was evaluated by measuring the tensile strength after 3 days of heating at 120°C. This was carried out without the addition of antioxidant and heat resistance enhancer. The percent decrease can be determined by the following formula.

$$\text{Percent decrease (\%)} = 100 - (\text{tensile strength after heating} \div \text{initial tensile strength} \times 100)$$

The storage moduli were measured using a Rheogel-E4000HP dynamic mechanical analyzer (from UBM). The measurement conditions consisted of, in a 0.8 to 1.5 mm extension test on a test specimen, an initial extension of 20 mm, a strain amplitude and frequency of 5 $\mu$m and 10 Hz, and a temperature rise rate of 3°C/min from -50°C to 150°C.

[Synthesis Example 1]

The interior of a flask was nitrogen flushed and then charged with 186.9 g of the unsaturated alcohol compound of formula (12) below and 0.10 g of Karstedt catalyst (platinum concentration, 0.5 wt%), and heated to 70°C. To this was added dropwise, over a period of 35 minutes, 363.0 g of the methylhydrogenpolysiloxane of formula (13) below. Following the completion of dropwise addition, the system was stirred at 110°C for 2 hours.

Unreacted material was then distilled off under heating and reduced pressure (220°C, 400 Pa). Activated carbon (2.5 g) was added and the system was stirred at room temperature for 2 hours, following which filtration was carried out with a filter (NA-500, from Advantec Co., Ltd.), giving 497.0 g of the hydroxyl group-containing organopolysiloxane of formula (14) below.

The appearance was clear and colorless, the kinematic viscosity was 125 $mm^2/s$, and the hydroxyl value was 112 mg KOH/g.

[Chem. 14]

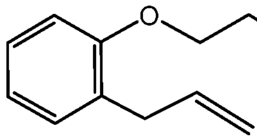

(12)

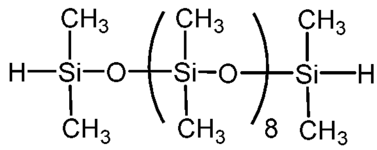

(13)

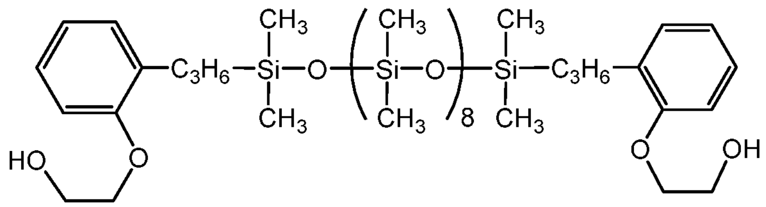

(14)

[Synthesis Example 2]

The interior of a flask was nitrogen flushed and then charged with 446.9 g of the unsaturated alcohol compound of formula (15) below and 0.23 g of Karstedt catalyst (platinum concentration, 0.5 wt%), and heated to 60°C. To this was added dropwise, over a period of 22 minutes, 742.8 g of the methylhydrogenpolysiloxane of formula (13) above. Following the completion of dropwise addition, the system was stirred at 110°C for 2 hours.

Unreacted material was then distilled off under heating and reduced pressure (220°C, 400 Pa). Activated carbon (5.9 g) was added and the system was stirred at room temperature for 2 hours, following which filtration was carried out with a filter (NA-500, from Advantec Co., Ltd.), giving 1,074.2 g of the hydroxyl group-containing organopolysiloxane of formula (16) below.

The appearance was clear and colorless, the kinematic viscosity was 372 $mm^2/s$, and the hydroxyl value was 105 mg KOH/g.

[Chem. 15]

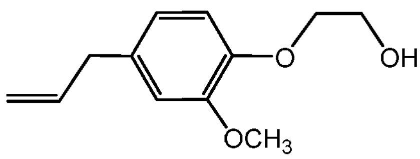

(15)

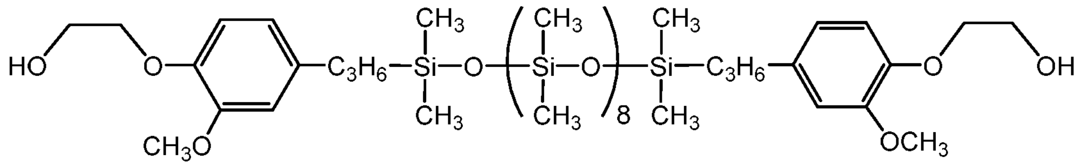

(16)

[Synthesis Example 3]

The interior of a flask was nitrogen flushed and then charged with 231.1 g of an unsaturated alcohol compound that is a mixture of the compound of formula (17) below and the compound of formula (18) below (content ratio of formula (17) compound and formula (18) compound: (17)/(18) = 86/14 mol%) and 0.11 g of Karstedt catalyst (platinum concentration, 0.5 wt%), and heated to 70°C. To this was added dropwise, over a period of 44 minutes, 363.0 g of the methylhydrogenpolysiloxane of formula (13) above. Following the completion of dropwise addition, the system was stirred at 110°C for 2 hours.

Unreacted material was then distilled off under heating and reduced pressure (220°C, 400 Pa). Activated carbon (3.0 g) was added and the system was stirred at room temperature for 2 hours, following which filtration was carried out with a filter (NA-500, from Advantec Co., Ltd.), giving 536.0 g of the hydroxyl group-containing organopolysiloxane of formula (19) below. In the product, the content ratio of primary hydroxyl groups and secondary hydroxyl groups was the same as the content ratio between the formula (17) compound and the formula (18) compound.

The appearance was clear and colorless, the kinematic viscosity was 283 $mm^2/s$, and the hydroxyl value was 92.2 mg KOH/g.

[Chem. 16]

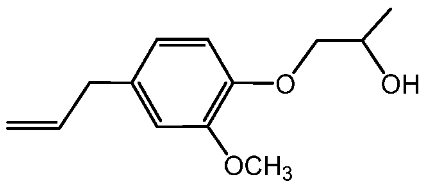

(17)

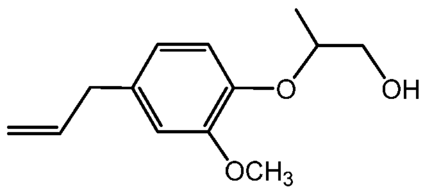

(18)

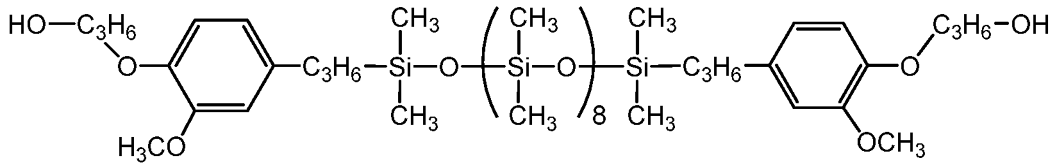

(19)

[Synthesis Example 4]

The interior of a flask was nitrogen flushed and then charged with 160.0 g of the unsaturated alcohol compound of formula (20) below and 0.07 g of Karstedt catalyst (platinum concentration, 0.5 wt%), and heated to 70°C. To this was added dropwise, over a period of 38 minutes, 219.0 g of the methylhydrogenpolysiloxane of formula (13) above. Following the completion of dropwise addition, the system was stirred at 110°C for 2 hours.

Unreacted material was then distilled off under heating and reduced pressure (220°C, 400 Pa). Activated carbon (2.0 g) was added and the system was stirred at room temperature for 2 hours, following which filtration was carried out with a filter (NA-500, from Advantec Co., Ltd.), giving 340.6 g of the hydroxyl group-containing organopolysiloxane of formula (21) below.

The appearance was clear and colorless, the kinematic viscosity was 408 $mm^2/s$, and the hydroxyl value was 98.7 mg KOH/g.

[Chem. 17]

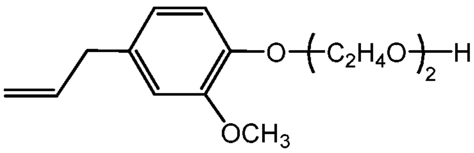

(20)

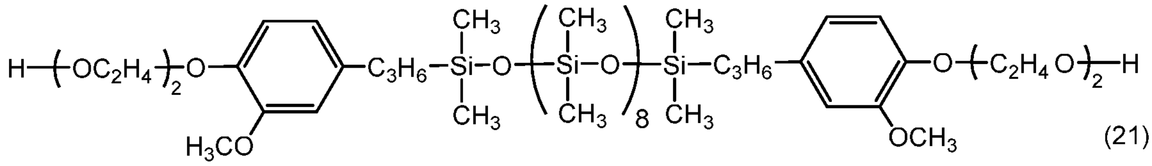

(21)

[Synthesis Example 5]

The interior of a flask was nitrogen flushed and then charged with 203.0 g of the unsaturated alcohol compound of formula (22) below and 0.11 g of Karstedt catalyst (platinum concentration, 0.5 wt%), and heated to 70°C. To this was added dropwise, over a period of 20 minutes, 325.2 g of the methylhydrogenpolysiloxane of formula (13) above. Following the completion of dropwise addition, the system was stirred at 110°C for 2 hours.

Unreacted material was then distilled off under heating and reduced pressure (220°C, 400 Pa). Activated carbon (2.5 g) was added and the system was stirred at room temperature for 2 hours, following which filtration was carried out with a filter (NA-500, from Advantec Co., Ltd.), giving 467.1 g of the hydroxyl group-containing organopolysiloxane of formula (23) below.

The appearance was clear and colorless, the kinematic viscosity was 290 $mm^2/s$, and the hydroxyl value was 109 mg KOH/g.

[Chem. 18]

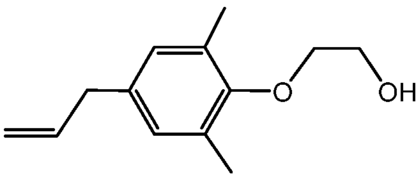

(22)

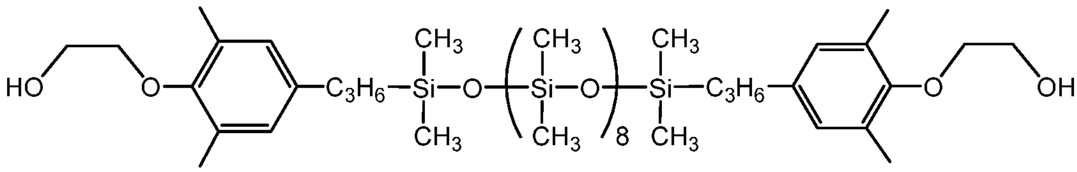

(23)

[Comparative Synthesis Example 6]

The interior of a flask was nitrogen flushed and then charged with 64.7 g of allyl glycol and 0.15 g of Karstedt catalyst (platinum concentration, 0.5 wt%), and heated to 70°C. To this was added dropwise, over a period of 30 minutes, 150.0 g of the methylhydrogenpolysiloxane of formula (13) above. Following the completion of dropwise addition, the system was stirred for 2 hours at 110°C.

Unreacted material was then distilled off under heating and reduced pressure (120°C, 400 Pa). Activated carbon (1.0 g) was added and the system was stirred at room temperature for 2 hours, following which filtration was carried out with a filter (NA-500, from Advantec Co., Ltd.), giving 171.9 g of the hydroxyl group-containing organopolysiloxane of formula (24) below.

The appearance was clear and colorless, the kinematic viscosity was 35.0 $mm^2/s$, and the hydroxyl value was 115 mg KOH/g.

[Chem. 19]

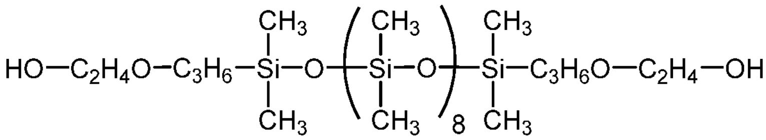

(24)

[Example 1]

The interior of a flask was nitrogen flushed and then charged with 71.1 g of the hydroxyl group-containing organopolysiloxane of Synthesis Example 1 and 0.003 g of zirconium tetraacetylacetonate ($Zr(acac)_4$). To this was added 36.5 g of hexamethylene diisocyanate and the system was stirred at 80°C for 2 hours. The system was cooled down to 35°C or below, 12.8 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Example 2]

The interior of a flask was nitrogen flushed and then charged with 72.7 g of the hydroxyl group-containing organopolysiloxane of Synthesis Example 2 and 0.003 g of zirconium tetraacetylacetonate ($Zr(acac)_4$). To this was added 35.0 g of hexamethylene diisocyanate and the system was stirred at 80°C for 2 hours. The system was cooled down to 35°C or below, 12.2 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Example 3]

The interior of a flask was nitrogen flushed and then charged with 76.7 g of the hydroxyl group-containing organopolysiloxane of Synthesis Example 3 and 0.003 g of zirconium tetraacetylacetonate ($Zr(acac)_4$). To this was added 32.4 g of hexamethylene diisocyanate and the system was stirred at 80°C for 2 hours. The system was cooled down to 35°C or below, 11.3 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Example 4]

The interior of a flask was nitrogen flushed and then charged with 75.0 g of the hydroxyl group-containing organopolysiloxane of Synthesis Example 4 and 0.003 g of zirconium tetraacetylacetonate ($Zr(acac)_4$). To this was added 33.9 g of hexamethylene diisocyanate and the system was stirred at 80°C for 2 hours. The system was cooled down to 35°C or below, 11.9 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Example 5]

The interior of a flask was nitrogen flushed and then charged with 71.8 g of the hydroxyl group-containing organopolysiloxane of Synthesis Example 5 and 0.003 g of zirconium tetraacetylacetonate ($Zr(acac)_4$). To this was added 36.0 g of hexamethylene diisocyanate and the system was stirred at 80°C for 2 hours. The system was cooled down to 35°C or below, 12.6 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Comparative Example 1]

The interior of a flask was nitrogen flushed and then charged with 70.3 g of the hydroxyl group-containing organopolysiloxane of Comparative Synthesis Example 6 and 0.003 g of zirconium tetraacetylacetonate ($Zr(acac)_4$). To this was added 37.0 g of hexamethylene diisocyanate and the system was stirred at 80°C for 2 hours. The system was cooled down to 35°C or below, 13.0 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes, giving a 1 mm thick cured sheet, and the tensile strength was measured. The results are presented in Table 1.

[Table 1]

| Contents (g) | | Example 1 | Example 2 | Example 3 | Example 4 | Example 5 | Comp. Example 1 |
|---|---|---|---|---|---|---|---|
| (A) Hydroxyl group-containing organopolysiloxane | Synthesis Example 1 | 71.1 | - | - | - | - | - |
| | Synthesis Example 2 | - | 72.7 | - | - | - | - |
| | Synthesis Example 3 | - | - | 76.7 | - | - | - |
| | Synthesis Example 4 | - | - | - | 75.0 | - | - |
| | Synthesis Example 5 | - | - | - | - | 71.8 | - |
| | Comparative Synthesis Example 6 | - | - | - | - | - | 70.3 |
| (B) Hexamethylene diisocyanate | | 36.5 | 35.0 | 32.4 | 33.9 | 36.0 | 37.0 |
| (C) 1,4-Butanediol | | 12.8 | 12.2 | 11.3 | 11.9 | 12.6 | 13.0 |
| $Zr(acac)_4$ | | 0.003 | 0.003 | 0.003 | 0.003 | 0.003 | 0.003 |
| Tensile strength (MPa) | Initial | 23 | 32 | 25 | 22 | 38 | 18 |
| | After 3 days at 120°C | 16 | 28 | 18 | 17 | 27 | 7.0 |
| | Percent decrease (%) | 30 | 13 | 28 | 23 | 29 | 61 |

The relative proportions of the ingredients, expressed as the molar ratio "hydroxyl group-containing organopolysiloxane : hexamethylene diisocyanate : 1,4-butanediol," were set to 1.0 : 3.06 : 2.0. The amount of zirconium tetraacetylacetonate added was set to 25 ppm.

As shown in Table 1, compared with the cured product of a known formulation in Comparative Example 1, each of

the cured products (siloxane-modified polyurethane resins) of the siloxane-modified polyurethane compositions of Examples 1 to 5 had a high initial tensile strength, a low percent decrease in tensile strength after heating at 120°C, and an improved heat resistance.

[Synthesis Example 7]

The interior of a flask was nitrogen flushed and then charged with 103.5 g of the unsaturated alcohol compound of above formula (15) and 0.22 g of Karstedt catalyst (platinum concentration, 0.5 wt%), and heated to 70°C. To this was added dropwise, over a period of 15 minutes, 1,012.5 g of the methylhydrogenpolysiloxane of formula (25) below. Following the completion of dropwise addition, the system was stirred at 110°C for 2 hours.

Unreacted material was then distilled off under heating and reduced pressure (220°C, 400 Pa). Activated carbon (5.6 g) was added and the system was stirred at room temperature for 2 hours, following which filtration was carried out with a filter (NA-500, from Advantec Co., Ltd.), giving 1,004.0 g of the hydroxyl group-containing organopolysiloxane of formula (26) below.

The appearance was clear and colorless, the kinematic viscosity was 244 $mm^2/s$, and the hydroxyl value was 23.0 mg KOH/g.

[Chem. 20]

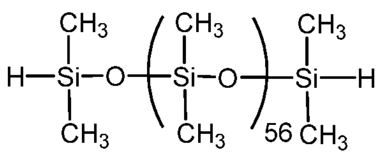
(25)

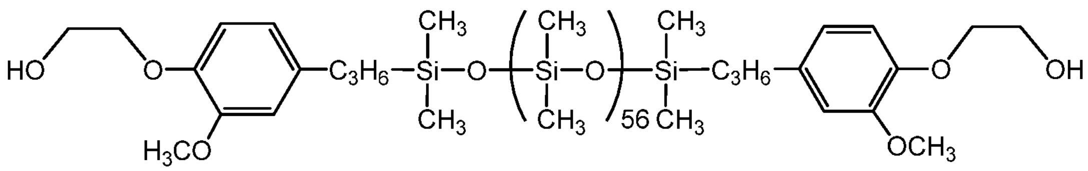
(26)

[Comparative Synthesis Example 8]

The interior of a flask was nitrogen flushed and then charged with 30.6 g of allyl glycol and 0.18 g of Karstedt catalyst (platinum concentration, 0.5 wt%), and heated to 70°C. To this was added dropwise, over a period of 30 minutes, 427.8 g of the methylhydrogenpolysiloxane of formula (25) above. Following the completion of dropwise addition, the system was stirred at 110°C for 2 hours.

Unreacted material was then distilled off under heating and reduced pressure (120°C, 400 Pa). Activated carbon (2.3 g) was added and the system was stirred at room temperature for 2 hours, following which filtration was carried out with a filter (NA-500, from Advantec Co., Ltd.), giving 395.4 g of the hydroxyl group-containing organopolysiloxane of formula (27) below.

The appearance was clear and colorless, the kinematic viscosity was 70.0 $mm^2/s$, and the hydroxyl value was 24.0 mg KOH/g.

[Chem. 21]

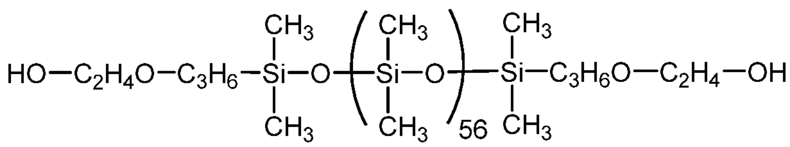
(27)

[Example 6]

The interior of a flask was nitrogen flushed and then charged with 102.4 g of the hydroxyl group-containing organopolysiloxane of Synthesis Example 7, 16.1 g of 4,4'-diphenylmethane diisocyanate, 0.006 g of zirconium tetraacetylacetonate ($Zr(acac)_4$) and 30 mL of methyl ethyl ketone, and the system was stirred at 80°C for 2 hours. The system was cooled down to 35°C or below, 3.8 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm thick cured sheet, and the tensile strength was measured. In addition, using the same cured sheet, the storage moduli at -30°C and +120°C were measured. The results are presented in Table 2.

[Comparative Example 2]

The interior of a flask was nitrogen flushed and then charged with 99.6 g of the hydroxyl group-containing organopolysiloxane of Comparative Synthesis Example 8, 16.3 g of 4,4'-diphenylmethane diisocyanate, 0.006 g of zirconium tetraacetylacetonate ($Zr(acac)_4$) and 30 mL of methyl ethyl ketone, and the system was stirred at 80°C for 2 hours. The system was cooled down to 35°C or below, 3.8 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm thick cured sheet, and the tensile strength was measured. In addition, using the same cured sheet, the storage moduli at -30°C and +120°C were measured. The results are presented in Table 2.

[Table 2]

| Contents (g) | | Example 6 | Comparative Example 2 |
|---|---|---|---|
| (A) Hydroxyl group-containing organopolysi oxane | Synthesis Example 7 | 102.4 | - |
| | Comparative Synthesis Example 8 | - | 99.6 |
| (B) 4,4'-Diphenylmethane diisocyanate | | 16.1 | 163 |
| (C) 1,4-Butanediol | | 3.8 | 3.8 |
| $Zr(acac)_4$ | | 0.006 | 0.006 |
| Tensile strength (MPa) | Initial | 4.3 | 0.9 |
| | After 3 days at 120°C | 4.3 | 0.7 |
| | Percent decrease (%) | 0 | 22 |
| Storage modulus (MPa) | -30°C | 4.89 | 2.94 |
| | +120°C | 2.85 | 0.54 |
| | Modulus ratio | 1.7 | 5.4 |

The relative proportions of the ingredients, expressed as the molar ratio "hydroxyl group-containing organopolysiloxane : 4,4'-diphenylmethane diisocyanate : 1,4-butanediol," were set to 1.0 : 3.06 : 2.0. The amount of zirconium tetraacetylacetonate added was set to 50 ppm.

As shown in Table 2, compared with the cured product of a known formulation in Comparative Example 2, the cured product (siloxane-modified polyurethane resin) of the siloxane-modified polyurethane composition of Example 6 had a high initial tensile strength, a low percent decrease in tensile strength after heating at 120°C, and an improved heat resistance. In addition, the temperature dependence of the storage modulus was low, and so the cured product had stable storage moduli from low temperature to high temperature.

[Synthesis Example 9]

The interior of a flask was nitrogen flushed and then charged with 131.0 g of the unsaturated alcohol compound of above formula (15) and 0.12 g of Karstedt catalyst (platinum concentration, 0.5 wt%), and heated to 70°C. To this was

added dropwise, over a period of 15 minutes, 484.2 g of the methylhydrogenpolysiloxane of formula (28) below. Following the completion of dropwise addition, the system was stirred at 110°C for 2 hours.

Unreacted material was then distilled off under heating and reduced pressure (220°C, 400 Pa). Activated carbon (3.0 g) was added and the system was stirred at room temperature for 2 hours, following which filtration was carried out with a filter (NA-500, from Advantec Co., Ltd.), giving 542.1 g of the hydroxyl group-containing organopolysiloxane of formula (29) below.

The appearance was clear and colorless, the kinematic viscosity was 216 $mm^2/s$, and the hydroxyl value was 55.7 mg KOH/g.

[Chem. 22]

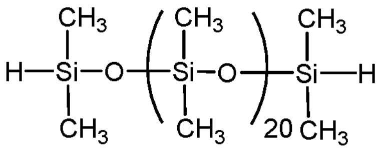

(28)

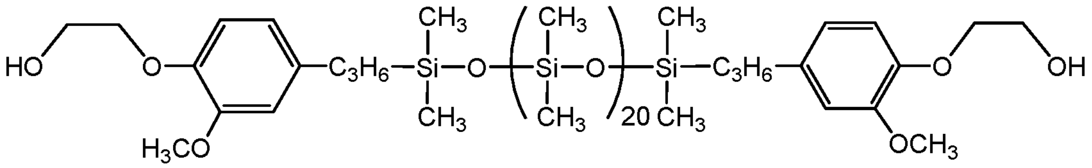

(29)

[Example 7]

The interior of a flask was nitrogen flushed and then charged with 60.4 g of the hydroxyl group-containing organopolysiloxane of Synthesis Example 9, 0.003 g of zirconium tetraacetylacetonate ($Zr(acac)_4$) and 20 mL of tetrahydrofuran. To this was added 24.1 g of 4,4'-dicyclohexylmethane diisocyanate and the system was stirred at 80°C for 2 hours. The system was cooled down to 35°C or below, and a mixed solution of 47.4 g of an amino group-containing organopolysiloxane of formula (30) below and 40 mL of tetrahydrofuran was added dropwise over a period of 35 minutes.

[Chem. 23]

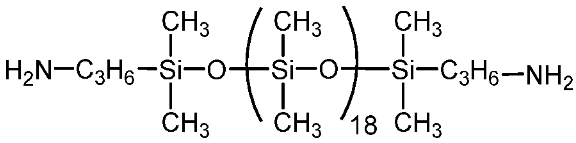

(30)

Next, 2.7 g of 1,4-butanediol was added, and stirring was carried out for 5 minutes. The flask contents were then transferred to a Teflon™ vat and the solvent was driven off under reduced pressure at 50°C, following which the system was heated at 120°C for 24 hours under a nitrogen atmosphere, giving a siloxane-modified polyurethane resin.

The resulting mass was press-molded under a molding pressure of 10 MPa at 210°C for 8 minutes to give a 1 mm thick cured sheet, and the tensile strength was measured. The results are presented in Table 3.

[Example 8]

The interior of a flask was nitrogen flushed and then charged with 17.66 g of the hydroxyl group-containing organopolysiloxane of Synthesis Example 2, 80.5 g of the hydroxyl group-containing organopolysiloxane of Synthesis Example 7 and 0.012 g of zirconium tetraacetylacetonate ($Zr(acac)_4$). To this was added 17.0 g of hexamethylene diisocyanate and the system was stirred at 80°C for 2 hours. The system was cooled down to 35°C or below, 5.9 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm thick cured sheet, and the tensile strength was measured. The results are presented in Table 3.

[Example 9]

The interior of a flask was nitrogen flushed and then charged with 83.9 g of the hydroxyl group-containing organopolysiloxane of Synthesis Example 7, 6.5 g of polytetramethylene glycol (molecular weight, 250), 0.006 g of zirconium tetraacetylacetonate ($Zr(acac)_4$) and 40 mL of methyl ethyl ketone. To this was added 22.1 g of hexamethylene diisocyanate, and the system was stirred at 80°C for 2 hours. The system was cooled down to 35°C or below, 7.7 g of 1,4-butanediol was added, and stirring was carried out for 5 minutes. The flask contents were then transferred to a Teflon™ vat and the solvent was driven off under reduced pressure at 50°C, following which the system was heated for 24 hours at 120°C under a nitrogen atmosphere, giving a siloxane-modified polyurethane resin.

The resulting mass was press-molded under a molding pressure of 10 MPa at 210°C for 8 minutes to give a 1 mm thick cured sheet, and the tensile strength was measured. The results are presented in Table 3.

[Synthesis Example 10]

The interior of a flask was nitrogen flushed and then charged with 48.7 g of the unsaturated alcohol compound of above formula (12) and 0.10 g of Karstedt catalyst (platinum concentration, 0.5 wt%), and heated to 80°C. To this was added dropwise, over a period of 5 minutes, 372.0 g of the methylhydrogenpolysiloxane of formula (31) below. Following the completion of dropwise addition, the system was stirred at 110°C for 2 hours.

Unreacted material was then distilled off under heating and reduced pressure (220°C, 400 Pa). Activated carbon (2.0 g) was added and the system was stirred at room temperature for 2 hours, following which filtration was carried out with a filter (NA-500, from Advantec Co., Ltd.), giving 353.8 g of the hydroxyl group-containing organopolysiloxane of formula (32) below.

The appearance was clear and colorless, the kinematic viscosity was 173 $mm^2/s$, and the hydroxyl value was 38.0 mg KOH/g.

[Chem. 24]

$$\left[ H(CH_3)_2SiO_{1/2} \right]_{3.0} \left[ (CH_3)_2SiO_{2/2} \right]_{56.5} \left[ CH_3SiO_{3/2} \right]_{1.0} \quad (31)$$

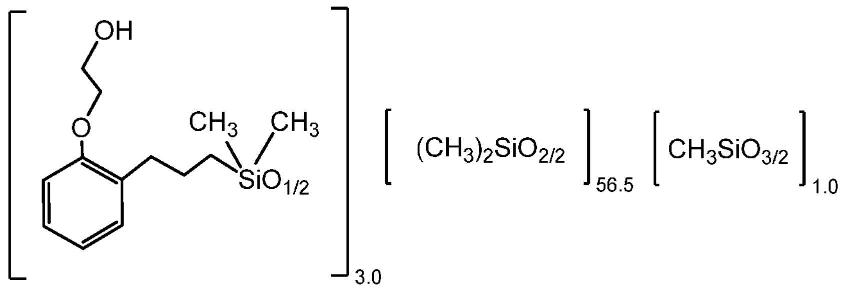

(32)

[Example 10]

The interior of a flask was nitrogen flushed and then charged with 88.6 g of the hydroxyl group-containing organopolysiloxane of Synthesis Example 10 and 0.012 g of zirconium tetraacetylacetonate ($Zr(acac)_4$). To this was added 24.1 g of 4,4'-dicyclohexylmethane diisocyanate, and the system was stirred at 80°C for 2 hours. The system was cooled down to 35°C or below, 5.4 g of 1,4-butanediol was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm

thick cured sheet, and the tensile strength was measured. The results are presented in Table 3.

[Table 3]

| Contents (g) | | Example 7 | Example 8 | Example 9 | Example 10 |
|---|---|---|---|---|---|
| (A) Hydroxy group-containing organopolysiloxane | Synthesis Example 9 | 60.4 | - | - | - |
| | Synthesis Example 2 | - | 17.6 | - | - |
| | Synthesis Example 7 | - | 80.5 | 83.9 | - |
| | Synthesis Example 10 | - | - | - | 88.6 |
| Amino group-containing organopolysiloxane (Compound 30) | | 47.4 | - | - | - |
| Polytetramethylene glycol (molecular weight, 250) | | - | - | 6.5 | - |
| (B) 4,4'-Dicyclohexylmethane diisocyanate | | 24.1 | - | - | 24.1 |
| (B) Hexamethylene diisocyanate | | - | 170 | 22.1 | - |
| (C) 1,4-Butanediol | | 2.7 | 5.9 | 7.7 | 5.4 |
| $Zr(acac)_4$ | | 0.003 | 0.012 | 0.006 | 0.012 |
| Tensile strength (MPa) | Initial | 8.5 | 11 | 15 | 7.8 |
| | After 3 days at 120°C | 8.0 | 9.3 | 11 | 7.7 |
| | Percent decrease (%) | 5.9 | 15 | 27 | 1.3 |

[Synthesis Example 11]

The interior of a flask was nitrogen flushed and then charged with 182.3 g of the unsaturated alcohol compound of above formula (15) and 0.30 g of Karstedt catalyst (platinum concentration, 0.5 wt%), and heated to 80°C. To this was added dropwise, over a period of 10 minutes, 1,296.0 g of the methylhydrogenpolysiloxane of formula (33) below. Following the completion of dropwise addition, the system was stirred at 110°C for 2 hours.

Unreacted material was then distilled off under heating and reduced pressure (220°C, 400 Pa). Activated carbon (7.4 g) was added and the system was stirred at room temperature for 2 hours, following which filtration was carried out with a filter (NA-500, from Advantec Co., Ltd.), giving 1,404.0 g of the hydroxyl group-containing organopolysiloxane of formula (34) below.

The appearance was clear and colorless, the kinematic viscosity was 231 $mm^2/s$, and the hydroxyl value was 33.0 mg KOH/g.

[Chem. 25]

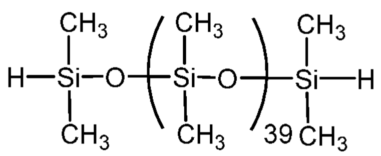

(33)

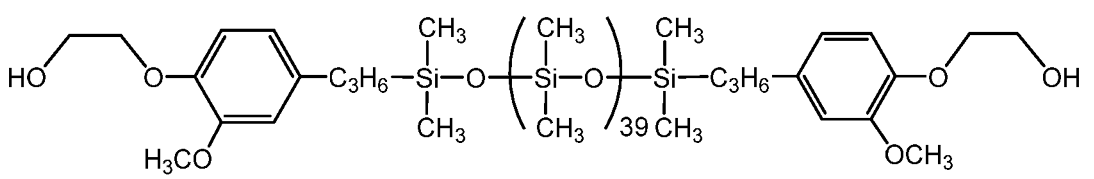

(34)

[Synthesis Example 12]

The interior of a flask was nitrogen flushed and then charged with 80.8 g of the unsaturated alcohol compound of above formula (22) and 0.25 g of Karstedt catalyst (platinum concentration, 0.5 wt%), and heated to 80°C. To this was added dropwise, over a period of 5 minutes, 762.7 g of the methylhydrogenpolysiloxane of formula (25) above. Following the completion of dropwise addition, the system was stirred at 110°C for 2 hours.

Unreacted material was then distilled off under heating and reduced pressure (230°C, 400 Pa). Activated carbon (4.5 g) was added and the system was stirred at room temperature for 2 hours, following which filtration was carried out with a filter (NA-500, from Advantec Co., Ltd.), giving 776.0 g of the hydroxyl group-containing organopolysiloxane of formula (35) below.

The appearance was clear and colorless, the kinematic viscosity was 191 $mm^2/s$, and the hydroxyl value was 24.5 mg KOH/g.

[Chem. 26]

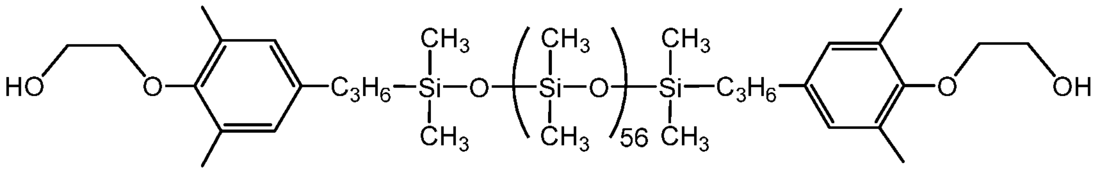

(35)

[Example 11]

The interior of a flask was nitrogen flushed and then charged with 95.2 g of the hydroxyl group-containing organopolysiloxane of Synthesis Example 11 and 0.012 g of zirconium tetraacetylacetonate ($Zr(acac)_4$). To this was added 17.8 g of isophorone diisocyanate, and the system was stirred at 80°C for 2 hours. The system was cooled down to 35°C or below, 7.3 g of 1,4-dihydroxymethylcyclohexane was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm thick cured sheet, and the tensile strength was measured. The results are presented in Table 4.

[Example 12]

The interior of a flask was nitrogen flushed and then charged with 100.8 g of the hydroxyl group-containing organopolysiloxane of Synthesis Example 12, 0.012 g of zirconium tetraacetylacetonate ($Zr(acac)_4$) and 30 mL of tetrahydrofuran To this was added 14.0 g of isophorone diisocyanate, and the system was stirred at 80°C for 2 hours. The system was cooled down to 35°C or below, 6.7 g of isophorone diamine was added, and stirring was carried out for 5 minutes. The flask contents were then transferred to a Teflon™ vat and, under a nitrogen atmosphere, heated at 120°C for 24 hours, giving a siloxane-modified polyurethane resin.

The resulting mass was press-molded under a molding pressure of 10 MPa at 210°C for 8 minutes to give a 1 mm thick cured sheet, and the tensile strength was measured. The results are presented in Table 4.

[Table 4]

| Contents (g) | | Example 11 | Example 12 |
|---|---|---|---|
| (A) Hydroxyl group-containing organopolysiloxane | Synthesis Example 11 | 95.2 | - |
| | Synthesis Example 12 | - | 100.8 |
| (B) Isophorone diisocyanate | | 17.8 | 14.0 |
| (C) 1,4-Dihydroxymethylcyclohexane | | 7.3 | - |
| (C) Isophorone diamine | | - | 6.7 |
| $Zr(acac)_4$ | | 0.012 | 0.012 |

(continued)

| Contents (g) | | Example 11 | Example 12 |
|---|---|---|---|
| Tensile strength (MPa) | Initial | 16 | 8.5 |
| | After 3 days at 120°C | 15 | 8.2 |
| | Percent decrease (%) | 6 | 4 |

## Claims

**1.** A siloxane-modified polyurethane composition comprising:

(A) a hydroxyl group-containing organosilicon compound of general formula (1) below

$$(R^1{}_3SiO_{1/2})_k(R^1{}_2SiO_{2/2})_p(R^1SiO_{3/2})_q(SiO_{4/2})_r \qquad (1)$$

[wherein each $R^1$ is independently a group selected from monovalent hydrocarbon groups of 1 to 10 carbon atoms and groups of formula (2) below, with the proviso that at least one of all the $R^1$ groups is a group of formula (2) below; k, p, q and r are numbers such that $k > 0$, $p \geq 0$, $q \geq 0$ and $r \geq 0$, with the proviso that $k+p+q \geq 2$; and the respective siloxane units shown in parentheses are bonded in any order

[Chem. 1]

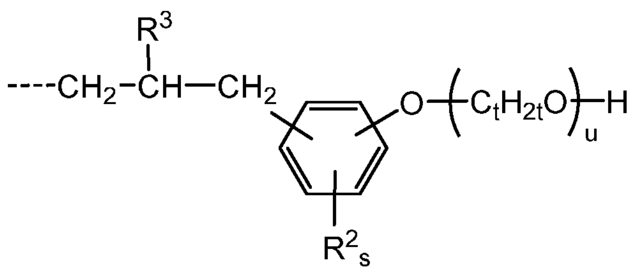

(2)

(wherein each $R^2$ is independently a hydrogen atom or a group selected from monovalent hydrocarbon groups of 1 to 5 carbon atoms and alkoxy groups of 1 to 5 carbon atoms, $R^3$ is a hydrogen atom or a methyl group, s is an integer from 0 to 4, t is an integer from 2 to 4, u is a number from 1 to 3, and the dashed line represents an available bond)],
(B) an isocyanate compound having two or more isocyanate groups per molecule, and
(C) an organic compound having two or more functional groups capable of reacting with isocyanate groups per molecule.

**2.** The siloxane-modified polyurethane composition of claim 1, wherein the group of formula (2) is a group of any of formulas (3) to (5) below

[Chem. 2]

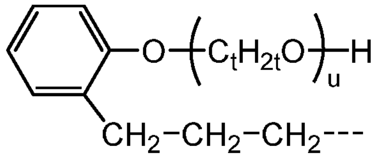
(3)

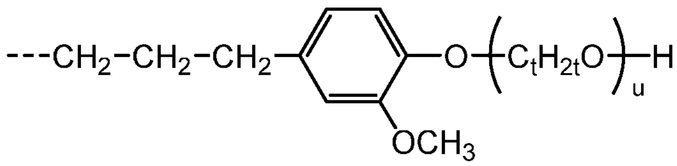
(4)

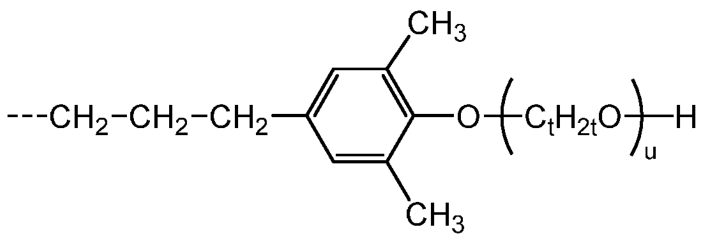
(5)

(wherein t and u are the same as above, and a dashed line represents an available bond).

**3.** The siloxane-modified polyurethane composition of claim 1 or 2 wherein, in formula (1) of component (A), k is a number from 2 to 5, p is a number from 2 to 100, q is a number from 0 to 3, r is 0, and from 2 to 5 of all the $R^1$ groups are groups of formula (2).

**4.** The siloxane-modified polyurethane composition of any of claims 1 to 3, wherein component (A) is the product of an addition reaction between an organohydrogenpolysiloxane of general formula (6) below

$$(R^4{}_3SiO_{1/2})_k(R^4{}_2SiO_{2/2})_p(R^4SiO_{3/2})_q(SiO_{4/2})_r \qquad (6)$$

(wherein each $R^4$ is independently a hydrogen atom or a monovalent hydrocarbon group of 1 to 10 carbon atoms, with the proviso that at least one of all the $R^4$ groups is a hydrogen atom; k, p, q and r are the same as above; and the respective siloxane units shown in parentheses are bonded in any order) and a compound of general formula (7) below containing a hydroxyl group and an aliphatic unsaturated group

[Chem. 3]

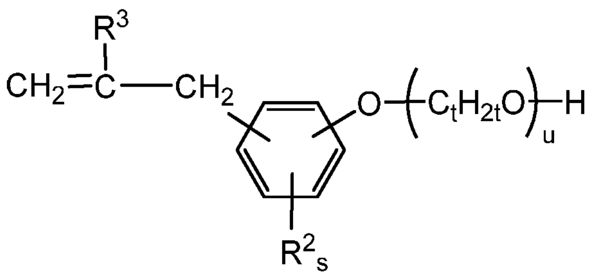
(7)

(wherein $R^2$, $R^3$ s, t and u are the same as above).

**5.** The siloxane-modified polyurethane composition of claim 4, wherein the compound of formula (7) having a hydroxyl group and an aliphatic unsaturated group is a compound of any of formulas (8) to (10) below

[Chem. 4]

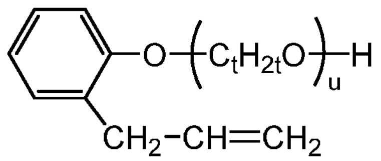

(8)

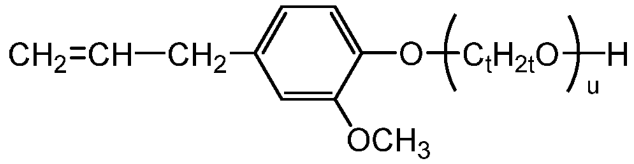

(9)

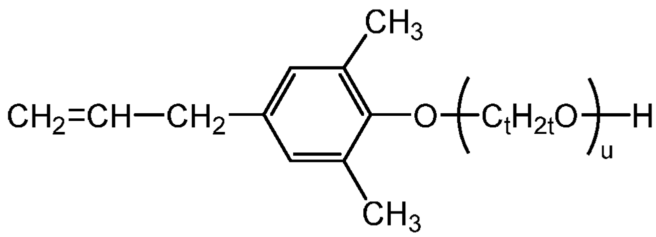

(10)

(wherein t and u are the same as above).

**6.** The siloxane-modified polyurethane composition of claim 4 or 5 wherein, in formula (6), k is a number from 2 to 5, p is a number from 2 to 100, q is a number from 0 to 3, r is 0 and from 2 to 5 of all the $R^4$ groups are hydrogen atoms.

**7.** The siloxane-modified polyurethane composition of any one of claims 1 to 6, wherein component (B) is a compound of formula (11) below

OCN-Q-NCO (11)

(wherein Q is a substituted or unsubstituted divalent hydrocarbon group of 1 to 20 carbon atoms).

**8.** The siloxane-modified polyurethane composition of claim 7 wherein, in formula (11), Q is a linear or branched alkylene group or an alkylene group having an alicyclic structure.

**9.** The siloxane-modified polyurethane composition of any one of claims 1 to 8, wherein the functional groups on component (C) that are capable of reacting with isocyanate groups are groups selected from hydroxyl, amino, carboxyl and mercapto groups.

**10.** A heat-cured form of the siloxane-modified polyurethane composition of any one of claims 1 to 9.

**11.** The heat-cured siloxane-modified polyurethane composition of claim 10 which has thermoplasticity.

**INTERNATIONAL SEARCH REPORT**

International application No.
**PCT/JP2023/005772**

**A. CLASSIFICATION OF SUBJECT MATTER**

***C08G 18/38***(2006.01)i; ***C08G 18/61***(2006.01)i
FI: C08G18/38 093; C08G18/61

According to International Patent Classification (IPC) or to both national classification and IPC

**B. FIELDS SEARCHED**

Minimum documentation searched (classification system followed by classification symbols)

C08G18/38; C08G18/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 7-165925 A (DAINICHISEIKA COLOR & CHEM MFG CO LTD) 27 June 1995 (1995-06-27) | 1-11 |
| A | JP 10-292026 A (SHIN ETSU CHEM CO LTD) 04 November 1998 (1998-11-04) | 1-11 |
| A | JP 2-115817 A (CIBA GEIGY AG) 27 April 1990 (1990-04-27) | 1-11 |
| A | JP 2019-147784 A (SHIN ETSU CHEM CO LTD) 05 September 2019 (2019-09-05) | 1-11 |
| A | US 4408033 A (THE DOW CHEMICAL COMPANY) 04 October 1983 (1983-10-04) | 1-11 |
| A | US 2808391 A (E. I. DU PONT DE NEMOURS AND COMPANY) 01 October 1957 (1957-10-01) | 1-11 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/005772**

| Patent document cited in search report | Publication date (day/month/year) | Patent family member(s) | Publication date (day/month/year) |
|---|---|---|---|
| JP 7-165925 A | 27 June 1995 | (Family: none) | |
| JP 10-292026 A | 04 November 1998 | US 5959034 A | |
| JP 2-115817 A | 27 April 1990 | US 4983702 A | |
| | | US 5426158 A | |
| | | EP 362145 A2 | |
| | | DE 68925328 C | |
| | | ES 2080758 T | |
| | | BR 8904891 A | |
| | | CA 1331068 A | |
| | | DK 475689 A | |
| | | HK 1005884 A | |
| | | IL 91710 A | |
| | | ZA 8907343 A | |
| | | AT 132514 T | |
| | | AU 4172389 A | |
| | | IE 70522 B | |
| | | MX 17738 A | |
| | | AR 245464 A | |
| | | GR 3018598 T | |
| | | ZA 897343 B | |
| | | AT 132514 E | |
| | | DK 475689 A0 | |
| JP 2019-147784 A | 05 September 2019 | US 2019/0264028 A1 | |
| | | EP 3530682 A1 | |
| | | CN 110194827 A | |
| | | KR 10-2019-0103031 A | |
| | | TW 201938574 A | |
| US 4408033 A | 04 October 1983 | US 4419299 A | |
| | | US 4412055 A | |
| | | US 4420587 A | |
| US 2808391 A | 01 October 1957 | GB 801023 A | |
| | | DE 1109363 B | |
| | | FR 1157159 A | |
| | | BE 550103 A | |
| | | CH 370920 A | |
| | | CH 373896 A | |
| | | NL 109058 C | |
| | | ES 230172 A | |
| | | ES 230172 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10101766 A
- JP 2017052821 A
- JP 2004250683 A
- JP 2004332126 A
- JP 2011174037 A
- JP 2014077120 A
- JP 2014193945 A
- WO 2016158967 A
- JP 2007508425 A